(19) Europäisches Patentamt
European Patent Office
Office européen des brevets

(11) **EP 1 870 162 A2**

(12) **EUROPEAN PATENT APPLICATION**
published in accordance with Art. 153(4) EPC

(43) Date of publication:
**26.12.2007 Bulletin 2007/52**

(51) Int Cl.:
***B02C 18/30*** (2006.01)

(21) Application number: **05817858.3**

(22) Date of filing: **03.11.2005**

(86) International application number:
**PCT/RU2005/000540**

(87) International publication number:
**WO 2006/049532 (11.05.2006 Gazette 2006/19)**

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **05.11.2004 RU 2004132157**

(71) Applicant: **Sirovatsky, Eduard Fedorovich
Lipetsk 398036 (RU)**

(72) Inventor: **Sirovatsky, Eduard Fedorovich
Lipetsk 398036 (RU)**

(74) Representative: **Hano, Christian
v. Füner Ebbinghaus Finck Hano
Postfach 95 01 60
81517 München (DE)**

(54) **MEAT PROCESSING METHOD, MEAT HASHING METHOD, MEAT HASHER, CUTTING UNIT FOR A MEAT HASHER, HASHED MEAT SEPARATOR (TWO VARIANTS) AND A CUTTING PAIR FOR A MEAT HASHER (THREE VARIANTS)**

(57) The inventions relate to processing meat, poultry and fish, as well as to mechanical engineering. At processing beef and pork, flesh is stripped from the biggest bones only. The stripping of muscle tissue from other bones, cartilages and tendons is carried out at mincing meat with the cutting unit of a special mincer. A separator incorporated into its cutting unit performs the layer-by-layer degassing of minced meat and selects hard and connective tissue inclusions. Minced meat is **characterized by** low calcium content. The products of primary meat separation are accumulated and afterwards minced with the cutting unit of the same mincer. At that, tissues are stripped from pieces of hard inclusions, muscle and adipose tissues are additionally minced, and minced raw materials are separated. Produced forcemeat, consisting mostly of connective tissues, is used instead of meat as a food additive at producing foodstuffs. The feeding unit and the cutting unit of the mincer are adapted for processing large meat pieces, including meat on bones, as well as poultry or fish carcasses. The design of the mincer feeding unit and cutting unit exclude the crushing, rupture and abrasion of tissues. In the cutting unit head (17) there are a receiving plate (25), an intermediate plate (26) and a cutting-separating plate (27), as well as unilateral knives (18 - 22). They are installed with formation of three direct-flow chambers (28, 29, 30). The plates and knives need no intermediate sharpening. The cutting unit of the special mincer is equipped with a system for automatically pressing knives against plates. This system reduces the wear of the tools and decreases iron content in minced meat. The wearing part shape of knife blades and plates is modified in such a way that formation of gaps between their interacting surfaces is impossible. The edges of knife and plate cutting elements are continuously renewed. The use of the inventions makes it possible to mechanize the most labour consuming and unhealthy processes taking place at processing meat, poultry and fish, to increase labour productivity, to greatly improve the quality of foodstuffs, to reduce their cost and to simplify mincer maintenance.

Fig. 4

EP 1 870 162 A2

## Description

### Field of invention

The invention relates to methods of processing food raw materials, to methods of mincing meat and other food products, as well as to devices, meant for realizing these methods. Primary application fields are meat-, poultry- and fish-processing branches of food industry, as well as machine-building.

### Prior art

At processing meat of large animals by the traditional pattern there are performed dressing carcasses, boning meat, trimming it with separating dense shaped and fibrous unshaped connective tissue and mincing produced meat pieces with the mincer cutting unit.

In the application No. PCT/RU00/00308, B02C 18/36, 01.02 2001 there is described a method of processing meat, consisting in cutting carcasses, boning meat, trimming it with producing pieces of a comparatively small weight, mincing meat with the cutting pairs of the mincer cutting unit and its separation. At trimming, the back tendon and largest cartilages are removed. Tendons and small cartilages, as well as fragments of large vessels, films and structures, combining muscle cells in bundles, are minced together with meat with the mincer cutting unit, and then they are removed with an in-built separator. Separation products, containing pieces of muscle tissue, the enumerated kinds of "friable" connective tissue and coarse inclusions, are accumulated. Then this mass is again ground with the cutting unit of the same mincer, with whose separator coarse components are removed. Produced forcemeat, consisting mostly of connective tissue particles, is additionally minced in a cutter and used in sausage production instead of meat as a protein supplement.

The deficiency of the considered meat processing method is that at its realization it is necessary to bone meat, as well as to cut it into relatively small pieces. Besides, it is impossible to process poultry and fish by the considered method.

In the articles "New Meat Processing Technology" (Particularized advisory "Meat technologies", No. 12 (12), 2003, p. 1-4) and "Designing new generation mincers" (Magazine "Meat industry", No. 12, 2003, pp. 23-26) there is a brief overview of a modified meat processing method. It is different from the method, described in the application No. PCT/RU00/00308, B02C 18/36, 01.02.2001, in that meat boning is performed with the separator of the mincer cutting unit.

The deficiency of the modified meat processing method is that at its realization meat has to be cut into relatively small pieces.

At realizing the meat mincing method, described in the application No. PCT/RU00/00308, B02C 18/36, 01.02.2001, into the receiving funnel of the used special mincer there are loaded pieces of meat after its boning and simplified trimming. With a cylindrical knife, fixed at the entrance of the pressure screw barrel, with which the mincer feeding unit is equipped, those parts are cut off from meat pieces, which do not fit into the barrel inlet. To the plates of the mincer cutting unit meat is supplied in a reciprocal mode, being moved out of the direct-flow chambers. On the receiving and intermediate plates meat pieces are cut into parts in four stages, and they are additionally minced on the cutting-separating plate cyclically. At performing each cycle the meat pieces are pressed to the surface of the cutting-separating plate, and muscle and adipose tissues are pressed into its orifices. Until the arrival of unilateral knife blades the plate prevents meat pieces, caught on it, from moving. At knife blades passing tissues, situated in the plate orifices, are cut off from meat pieces with the cutting pairs. Then those meat pieces, which are not connected with the cutting-separating plate, are returned into the adjoining direct-flow chamber. After knife blade passing these meat pieces are again supplied to the cutting-separating plate, and a new cycle of their mincing is started. Small bone pieces, scraps of cartilages and tendons, coming with meat, are selected from it with the first stage of the separator. The second stage of the separator traps scraps of large vessels, films and structures, combining muscle cells into bundles. Hard components are brought out of the mincer cutting unit through a radial discharge branch, and scraps of "friable" connective tissues are brought out through an axial one.

The considered method does not allow combining mincing meat with its mechanical removing from animal bones.

There is known a mincer by the "K+G Wetter" company (see "The Automatic Mincer AW 160. Service instruction"), whose feeding unit is supplemented with a vertical chute, communicating the mincer receiving funnel with the barrel of the pressure screw. Such feeding unit design allows processing large meat pieces.

The deficiency of the "K+G Wetter" mincer is that the pressure screw barrel of its feeding unit is not equipped with a knife, installed in its inlet.

In the head of the known mincer cutting unit (see the application No. PCT/RU00/00308, B02C 18/36, 01.02 2001) there are installed a clamping spider, a receiving plate, an intermediate plate and a cutting-separating plate, as well as unilateral knives, adjoining the plates and put on the shank of the pressure screw. The plates and knives are installed with the formation of three direct-flow chambers. As the supports of the pressure screw shank there are used friction bearings, put on the shank and installed with the possibility to move in axial direction. The friction bearings are made in the form of sleeves, inserted in the central orifices of the receiving and intermediate plates. The cutting unit is equipped with a device for automatically pressing knives to plates. This device incorporates distance rings, installed between the plates, and sets of spreading sleeves. Every such set also includes a resilient element, compressed with an acorn nut, screwed on the head of the cutting unit during its assembly. As the cutting tools wear out, the energy of the compressed resilient elements is spent on pressing the knives to the plates.

The deficiency of the considered mincer cutting unit is the complexity of its design. It is complicated with distance rings and sets of spreading sleeves, whose thickness has to be periodically increased.

Another deficiency of the known cutting unit is low reliability of the screw joint of the head and the acorn nut. The effort, growing as the resilient element is compressed, is transferred to the said screw joint, which leads to its fast wear.

There is known a minced meat separator, built into the mincer cutting unit (application No. PCT/RU00/00308, B02C 18/36, 01.02.2001). The separator incorporates a direct-flow chamber, a cutting-separating plate and a unilateral separating knife, installed in the chamber, as well as a radial discharge branch and an axial one. Each of the discharge branches is equipped with shutoff and control valves. Separating knife blades are made with longitudinal recesses. At knife rotation these recesses, interacting with the working surface of the cutting-separating plate, form rotated discharge channels, each of which communicates zones of the direct-flow chamber, adjacent to them, with the axial discharge branch.

The deficiency of the known separator is that it cannot be used for the mechanical removal of meat from bones, cartilages and tendons. Its radial discharge branch does not have an accumulating pit and is not protected from the stream of meat, supplied to the cutting-separating plate. Besides, the longitudinal recesses, made in the separating knife blades, have no inclines, widening in direction opposite to that of discharge channel circular movement. This leads to clogging the separator discharge channels with flat cartilage and tendon pieces. The considered minced meat separator has another deficiency: at mincer running it is necessary to simultaneously operate the shut-off and control valves of two discharge branches.

There are known a mincer plate and knife (application No. PCT/RU97/00379, B02C 18/30, 04.06 1998), whose design makes the occurrence of clearances between their interacting surfaces impossible. The plate wearing part, which interacts with the adjoining knife at mincer operation, has the form of a ring projection, enclosing the area of orifices to pass meat, made in them. Knife blade wearing parts, which interact with the adjoining plate at mincer operation, have the form of figured projections. The basic parameter, determining the shape of the base of a knife blade figured projection, is its width, measured as the length of the arc $l_i$ having radius $\rho_i$. The basic parameter of the plate working surface is the value $\sum_{j=1}^{n} l_{j,i}$ which is the length of a circle of the same radius $\rho_i$, belonging to the plate working surface and continuous or interrupted by orifices to pass meat. The relation between the said parameters of cutting pair interacting surfaces is described with the equation $l_i = \frac{l}{2\pi\rho} \sum_{j=1}^{n} l_{j,i}$, where $l$ is the length of the arched base of a knife blade sole, having radius $\rho$.

Dividing both parts of the equation by $\sum_{j=1}^{n} l_{j,i}$, we get the proportional dependence $l_i / \sum_{j=1}^{n} l_{j,i} = \frac{l}{2\pi\rho}$, connecting the basic parameters of the pair interacting surfaces.

At designing the viewed mincer cutting pair the wear of the interacting surfaces due to friction has been considered. However, both the increase of the wear intensity of these surfaces in peripheral direction and the cutting of pair parts with their cutting elements have not been considered.

There are known (application No. PCT/RU00/00308, B02C 18/36, 01.02 2001) a plate and knife, whose design is developed with account of the increasing wear intensity of the pair interacting surfaces in peripheral direction. In this case the basic parameters of pair interacting surfaces are joined by the equation

$$l_i = \frac{l}{2\pi\rho}(1+\xi\frac{\rho_i}{\rho})\sum_{j=1}^{n} l_{j,i} ,\qquad\qquad [1]$$

where $1+\xi\frac{\rho_i}{\rho}$ is a correcting function.

Dividing both parts of the equation [1] by $\sum_{j=1}^{n} l_{j,i}$ we get the relation $l_i / \sum_{j=1}^{n} l_{j,i} = \frac{l}{2\pi\rho}(1+\xi\frac{\rho_i}{\rho})$, according to which in any contact point of pair interacting surfaces the relation $l_i / \sum_{j=1}^{n} l_{j,i}$ is proportionate to the value of the said correcting function, calculated for this contact spot.

The deficiency of the considered cutting pair is that its design is developed without regard to cutting the plate ring projection with the cutting edges of knife blades. The cutting of knife blade figured projections with the front portions of plate orifice edges is not taken into account as well.

## Disclosure of Invention

At creating the invention a complex of six tasks was solved. There was a need to develop a new method of processing meat, based on a previously unknown method of mincing meat. To solve this basic task the known mincer had to be improved. A necessity to create a more perfect mincer cutting unit occurred. The minced meat separator, built into the mincer cutting unit, had to be improved and, finally, the known mincer cutting pair had to be upgraded. Solving the complex of the enumerated tasks lets us: 1) mechanize most labour consuming and unhealthy processes, taking places at processing meat, poultry and fish; 2) increase labour productivity; 3) abruptly improve the quality of foodstuffs; 4) greatly reduce their production cost and 5) simplify mincer maintenance. The high efficiency of the developments is provided by a number of innovations. The main one is that three processes are combined in one device: mechanical removal of meat from bones, cartilages and tendons, mincing meat by cutting only and its separation, providing for selecting not only any kinds of hard inclusions, but also practically all kinds of friable connective tissues.

The first one of the set tasks was solved due to changing the known meat processing method. Like the known one, the new meat processing method includes cutting animal carcasses, boning meat and mincing it with a mincer cutting unit. At that, meat is minced by a particular method, specially meant for realizing the suggested meat processing method. The peculiarities of the special meat mincing method will be described below.

The suggested meat processing method differs from the known one in that, first of all, it allows processing not only all kinds of meat, but also poultry and fish. At realizing the new method, carcasses of large animals or carcasses of large fish or, if necessary, carcasses of small animals, carcasses of birds or fish are cut into fragments of a certain size. The size of produced fragments is limited by the volume of spaces, enclosed between the coils of the feeding screw blade of the used special mincer. At that, in case of processing carcasses of large animals, meat is manually removed from the largest bones. A special mincer is used for processing produced flesh together with remaining carcass fragments or either fragments or whole carcasses of small animals, or either fragments or whole carcasses of birds, or either carcass fragments or carcasses of fish. The design of the special mincer will be described below. In the cutting unit of this mincer the mincing and separation of meat are combined with its mechanical boning, which is performed by means of cutting off not less than 90 % of muscle tissues from bone, cartilage and tendon pieces. The rest of the muscle tissues together with "friable" connective tissues, clinging to the hard inclusions, are cut off at the final stage of additionally mincing primary separation products. For this purpose the cutting elements of the same minced meat separator, built into the same cutting unit of the same special mincer, are used. At that, however, the meat pressure in the cutting unit head is reduced by 30 - 70 %.

There is a modified meat processing method. In this case after removing meat from the largest bones of pig carcasses simplified meat trimming is performed, presupposing dividing selected meat pieces into three grades. Meat of these grades is minced by the suggested special method, and lean, semi-fat and fat forcemeat with low calcium content is produced.

There is another variety of the suggested meat processing method, at whose realization there is performed the removal of meat from the bones of cattle carcasses and its simplified trimming, presupposing dividing produced meat pieces into three grades. Meat of these grades is minced by the suggested special method, and forcemeat of the higher, first and second grade is produced, each of the categories being characterized by low calcium content.

Another new feature of the suggested meat processing method is that primary meat separation products, produced at mincing pieces of higher- (or first-) grade beef, are additionally ground in mixture with pieces of first- (or second-) grade beef. In such a case apart from meat only those accumulated primary separation products are additionally ground, which were produced at mincing and separating second-grade meat.

From forcemeat, produced at additionally mincing primary separation products, emulsion is prepared, which is used instead of meat in producing foodstuffs as a natural protein additive. At processing meat by such a variant of the suggested method produced emulsion is processed with acetic, lactic, amber or paratartaric acid.

To solve the second problem, set at creating the invention, the known meat mincing method had to be improved. The designed special meat mincing method is meant for using in realizing the above-described new meat processing method.

As well as at realizing the known method, a mincer is used at mincing meat. From meat pieces, going into the barrel of the mincer pressure screw, those parts are cut off, which protrude beyond its inlet. As well as at realizing the known method, they are hashed with the blade of a curved knife, installed in the inlet of the pressure screw barrel, which periodically interacts with the blade of its catching part. With the pressure screw, interacting with the barrel, enclosing it, meat is forced into the cutting unit cavity of the special mincer. Here on the receiving and intermediate plates, interacting with two receiving and two intermediate knives, meat is cut into parts together with bones, cartilages and tendons in four stages. Produced meat pieces go into a direct-flow chamber, from which they are supplied to the cutting-separating plate in a reciprocal mode. The muscular and fatty tissues of the meat pieces are pressed into the orifices of the cutting-separating plate. Tissues, placed into these orifices, are cut off with the cutting elements of the cutting-separating pair, periodically closing up at blade passing of the unilateral separating knife. As well as at realizing the known method, the cutting-separating plate is used not only for mincing meat through cutting, but also for removing both coarse inclusions and scraps of large vessels, films and structures, combining muscle cells into bundles, from minced meat. Coarse inclusions and fragments of "friable" connective tissue, removed from meat in such a way, are discharged from the cutting unit head in the form of primary separation products, which are accumulated and then additionally ground with the cutting unit of the same mincer. At that, hard inclusions are removed from them with the same minced meat separator. The suggested special meat mincing method differs from the known one in that, first of all, it allows mincing large meat pieces and fragments of large animal carcasses, which are meat on bones. By this method it is also possible to mince fragments or whole carcasses of small animals or fragments or whole bird carcasses, or carcass fragments or whole fish carcasses. At realizing the special meat mincing method a special mincer is used, whose design will be described below. Another new feature is that meat, loaded into the receiving funnel of the special mincer, is hashed into parts with an inlet cutting pair. At that, such meat pieces are produced, whose size allows placing them in spaces between the catching part coils of the pressure screw blade. Then in five stages these meat pieces are hashed into parts together with bones, cartilages and tendons. First meat is hashed with the blade of the barrel curved knife, periodically interacting with the blade of the pressure screw catching part. Then it is hashed with four cutting element groups of the receiving and intermediate plates and knives (the design peculiarities of the wearing parts of the said plates and knives of the special mincer will be described below). The special meat mincing method presupposes using the new minced meat separator, built into the special mincer cutting unit head. The design of the used minced meat separator will be described below. At the final stage of mincing meat with the cutting elements of the cutting-separating plate not less than 90% of muscle tissues are cut off from pieces of bones, cartilages and tendons. The rest of the muscle tissues together with "friable" connective tissues, clinging to the said hard inclusions, are cut off from them at the final stage of additionally mincing primary separation products. For this purpose the cutting elements of the same minced meat separator, built into the same cutting unit of the same mincer, are used. At that, however, the meat pressure in the cutting unit head is reduced by 30 - 70 %.

There is a modified variant of the new meat mincing method. In this case those meat piece parts, which protrude beyond the inlet of the pressure screw barrel, are cut off together with bones, cartilages and tendons, contained in the pieces, at their movement on the curved knife blade of the pressure screw barrel.

By another variant of the suggested method, meat pieces together with bones, cartilages and tendons, going through the orifices of the inlet, receiving and intermediate plates, are cut into parts at their movement on the edge front parts of the said orifices.

To solve the third one of the set tasks there has been designed a special mincer, meant for realizing the special meat mincing method, described above. Like in the housing of the known machine, in the housing of the new mincer there is a receiving funnel, a feeding unit, a feeding screw and its drive. The pressure screw blade has a catching part and a forcing part. A portion of the pressure screw blade catching part is situated in the cavity of the curved knife, fixed on the pressure screw barrel. The pressure screw barrel is communicated with the cavity of the cutting unit head. In the cavity of the mincer cutting unit head a receiving plate, an intermediate plate and a cutting-separating plate are installed. These plates are adjoined by two unilateral receiving knives, two unilateral intermediate knives and a unilateral separating knife. The said plates and knives are installed with formation of three direct-flow chambers.

The suggested mincer is different from the known one in that the curvilinear knife of the pressure screw barrel is made in the form of a pipe piece with a longitudinal slit. At that, the mincer feeding unit is supplemented with a feeding screw with an individual drive. The catching part of the feeding screw blade is situated in the bed of the receiving funnel. The mincer feeding unit is supplemented with a chute, communicating its receiving funnel with the cavity of the pressure screw barrel. The chute bed encloses the lower portion of the pressure screw blade catching part. Another new feature is that the mincer feeding unit is equipped with an inlet plate and an inlet knife, installed before the chute (the wearing part design peculiarities of all the plates and knives of the special mincer cutting unit will be described below). The suggested mincer includes a minced meat separator, built into the cutting unit head, whose design is considerably different from the design of the known separator (the design peculiarities of the used minced meat separator will be described below).

Another new feature of the suggested mincer is also that the feeding screw and the pressure screw are installed at different levels, and their axes are in the same vertical plane or in a plane, tilted to the horizon at an angle greater than the angle of the natural slope of minced meat pieces.

By another variant of mincer design its feeding and pressure screws are installed at an angle to each other.

By one of mincer design variants, at least, a portion of the pressure screw catching part is made two-thread.

By yet another mincer design variant its receiving cutting pair is installed with the formation of a direct-flow chamber.

Another new feature of the suggested mincer is that the blades of the unilateral inlet knife are curved or tilted in the direction of its rotation, and the jut tops of the front portions of the edges of orifices to pass meat, made in the inlet plate, are displaced towards its centre.

There is another variant of mincer design, according to which the blade of the curved knife of the pressure screw barrel is made with a slope in the direction of meat movement.

There is also a different variant of mincer design, according to which the curved knife of the pressure screw barrel has a V-shaped blade.

Another new feature is that the curved knife, with which the barrel of the mincer pressure screw is equipped, is installed with the ability of its turning in relation to the axis of the pressure screw barrel.

Yet another new feature of the suggested meat grinder is that its pressure screw drive is made, at least, two-speed.

Besides, a new feature of the suggested meat grinder is that in the cavity of its chute a pressure sensor is installed, being a part of the system of automatically controlling feeding screw drive operation.

To solve the fourth problem the known mincer cutting unit has been changed. The suggested special mincer cutting unit has common features with the known cutting unit. Particularly, in their heads a clamping spider, an adjoining cutting-separating plate, as well as an intermediate plate and a receiving plate are installed. These plates are adjoined by a unilateral separating knife, two unilateral intermediate knives and two unilateral receiving ones, installed with the formation of three direct-flow chambers. Like the known cutting unit, the suggested one includes an in-built minced meat separator. Like the known one, the suggested cutting unit also includes sets of spreading sleeves, installed between the hubs of the unilateral knives. At least, one of the used spreading sleeves has the form of a resilient element. Another common feature of the suggested cutting unit and the known one is that a removable support sleeve is inserted into the central orifice of the intermediate or cutting-separating plate.

A new feature of the suggested cutting unit is that the resilient element, used in it, is made, at least, two-stage. At that, the receiving and intermediate plates, as well as the adjoining knives are installed in the cutting unit head with the possibility of their movement in axial direction. The design peculiarities of the wearing parts of the plates and knives of the special mincer cutting unit will be described below. The suggested cutting unit includes a new minced meat separator, built into the cutting unit head. The design peculiarities of the used minced meat separator will be described below. Another new feature of the suggested special mincer cutting unit is that the support sleeve, inserted into the orifice of the receiving or intermediate plate, is attached to the hub of the adjoining knife.

Another new feature of the suggested cutting unit is that the blades of its unilateral receiving and intermediate knives are curved or tilted in the direction of their circular movement. At that, the jut tops of the edge front portions of orifices to pass meat, made in the receiving and intermediate plates, are displaced towards their centres.

Another new feature of the suggested cutting unit is that in the area of its adjoining the arms of the clamping spider the cutting-separating plate has no orifices to pass meat.

Besides, a new feature of the suggested cutting unit is that a stationary clamping spider is fixed in its head. A forcing screw is screwed into the central orifice of the stationary clamping spider, the said screw resting against the clamping spider, adjoining the cutting-separating plate.

Yet another new feature of the suggested special mincer cutting unit is that the area of, at least, one orifice to pass meat, made in the intermediate plate, is 1.5-3.0 as great as the area of its other orifices.

The fifth problem, set at creating the invention, is solved by means of improving the known minced meat separator. Like the known separator, the suggested one is built into the mincer cutting unit head. The working organs of both the improved separator and the known one are represented by a cutting-separating plate and a unilateral separating knife, installed at the end of the direct-flow chamber, which is the last one in the course of meat movement. The blades of the used separating knife are made with longitudinal recesses. As well as like those of the known minced meat separator, the working surface of the cutting-separating plate and the longitudinal recesses of the separating knife blades form rotated discharge channels. At that, each of the discharge channels communicates the adjoining zone of the direct-flow chamber with the receiving orifice of an axial discharge branch.

In the suggested minced meat separator a new cutting-separating plate and a new unilateral separating knife are used, the design peculiarities of the wearing parts of which will be described below. At that, the blades of the unilateral separating knife are curved or tilted in the direction of its circular movement, and the longitudinal recesses, made in these blades, widen in opposite direction.

Another new feature of the suggested minced meat separator is that the diameter of, at least, one fourth of orifices to pass meat, made in the cutting-separating plate, and, namely, of those, which are situated in its central area, is 70 - 90 % of the diam

The fifth problem can be solved by another design variant of the known minced meat separator. The separator, made by this variant, is also built into the head of the above-considered special mincer cutting unit. The working organs of this separator are also represented by a cutting-separating plate and a unilateral separating knife, which are installed at the end of the direct-flow chamber, situated last in the course of meat movement. The blades of the separating knife are made with longitudinal recesses, too. Like in the known minced meat separator, the working surface of the cutting-separating plate and the longitudinal recesses of the separating knife blades form rotated discharge channels at mincer operation. Each of such discharge channels periodically communicates the adjoining zone of the direct-flow chamber with the receiving orifice of a radial discharge branch.

This variant of the suggested minced meat separator is equipped with a new design cutting-separating pair as well. The wearing part design peculiarities of the new plate and knife will be described below. Another new feature of the suggested separator variant is that the blades of the unilateral separating knife are curved or tilted in direction opposite to that of their circular movement. At that, the longitudinal recesses, made in these blades, widen in the same direction.

Another new feature of the suggested minced meat separator is that the inlet of the radial discharge branch is situated in the pit of the cutting unit head.

Another new feature of the suggested minced meat separator is that in front of the pit of the radial discharge branch inlet a shield is installed.

Another new feature of the suggested minced meat separator is that the unilateral separating knife has a rim with ports.

The new minced meat separator has another peculiarity. The diameter of, at least, one fifth of the orifices to pass meat, made in the cutting-separating plate, namely, of those, situated in its peripheral area, is 70-90 % of the diameter of the other plate orifices.

Another new feature of the suggested minced meat separator is that orifices to pass meat, made in the cutting-separating plate, are arranged by the principle of a monofilar helix or by the principle of multifilar helixes. At that, the axes of the said orifices are tilted in the direction of separating knife rotation.

The sixth problem is solved by means of modifying the known mincer cutting pair. One part of the improved cutting pair, like that of the known one, is represented by a plate ring projection, which encloses both the area of orifices to pass meat, made in the plate, and two continuous ring zones, bordering this area. The other part both of the new cutting pair and the known one is a knife blade figured projection, which widens in peripheral direction but, at that, has, at least, one area, narrowing in the same direction. The interacting surfaces both of the known cutting pair and of the new one are interrelated in a special way. The character of this relation is such that in any point of their contact the length of an arc, belonging to a knife blade base (45) is proportionate to the length of a circle of the same radius, belonging to a plate working surface (40), the said circle being continuous or interrupted by orifices to pass meat.

A new feature of the suggested cutting pair is that the height of the plate ring projection (39) is proportionate to the height of the knife blade figured projection (44), at that, the constant of proportionality, relating these heights, and the constant of proportionality, relating the said parameters of the interacting surfaces, are correlated as the volumes of pair wearing parts.

Another new feature of the suggested cutting pair is that the ratio of the height of the plate ring projection (39) to the height of the knife blade figured projection (44) is determined by the expression $\frac{\delta_2}{\delta_1} = \frac{V_2}{V_1} \frac{l}{2\pi\rho}$, where $V_2$ and $V_1$ are the volumes of the plate ring projection (39) and the knife blade figured projection (44) and $l$ is the length of the arched base of the sole (45), having radius $\rho$. At that, the shape of the knife blade sole (45) and the configuration of the plate working surface (40) are related by the equation $l_i / \sum_{j=1}^{t} l_{j,i} = \frac{l}{2\pi\rho}$, where $l_i$ is the length of an arc, having radius $\rho_i$ and belonging to the sole (45), and $\sum_{j=1}^{t} l_{j,i}$ is the length of a circle, which is continuous or interrupted by orifices to pass meat and belongs to the working surface (40) of the plate ring projection (39), expressed as a sum of the lengths of $\tau$ arcs $l_j$, having radius $\rho_j$, the ends of each of which lie on the edges of orifices to pass meat.

The sixth problem is solved by means of modifying the known mincer cutting pair by another variant. In this case one part of the improved cutting pair, like that of the known one, is also represented by the plate ring projection, which encloses both the area of orifices to pass meat, made in the plate, and two ring zones, bordering this area. The other part of both the new cutting pair and the known one is a knife blade figured projection, which widens in peripheral direction but, at that, has, at least, one portion, narrowing in the same direction. The interacting surfaces of both the known cutting pair and the new one are interrelated in a special way. The character of this relation is such that in any point of their contact the length of an arc, belonging to a knife blade base (45) is proportionate to the length of a circle of the same radius, belonging to the plate working surface (40), the said circle being continuous or interrupted by orifices to pass meat.

A new feature in such a cutting pair variant is that the functional relation, connecting the interacting surfaces of the pair, is supplemented with a correcting function, considering the increase of pair part wear intensity in peripheral direction. At that, the ratio of the height of the plate ring projection (39) to the height of the knife blade figured projection (44) is proportionate to the volume ratio of these projections, multiplied by the arithmetic mean value of the total of the values of the used correcting function, calculated for the considered contact spots. Another new feature is that the constants of proportionality, relating the said parameters of the pair interacting surfaces and the heights of the pair wearing parts, correlate as their volumes.

Besides the above-said, a new feature in the second variant of the cutting pair is that the ratio of the height of the plate ring projection (39) to the height of the knife blade figured projection (44) is determined by the expression

$\delta_2 / \delta_1 = \dfrac{V_2}{V_1} \dfrac{l}{2\pi\rho}(1 + \xi \dfrac{\rho_i}{\rho})$, where $1 + \xi \dfrac{\rho_i}{\rho}$ is a correcting function, considering the increase of the wear intensity of the pair parts in peripheral direction, and $\xi$ is an empirical coefficient. At that, the shape of the knife blade sole (45) and the configuration of the plate working surface (40) are related by the equation $l_i / \sum\limits_{j=1}^{n} l_{j,i} = \dfrac{l}{2\pi\rho}(1 + \xi \dfrac{\rho_i}{\rho})$.

The sixth problem is also solved by means of modifying the known mincer cutting pair by a third variant. In this case one part of the improved cutting pair, like that of the known one, is also represented by the plate ring projection, which encloses both the area of orifices to pass meat, made in the plate, and two continuous ring zones, bordering this area. The other part of both the new cutting pair and the known one is a knife blade figured projection, which widens in peripheral direction but, at that, has, at least, one portion, narrowing in the same direction. The interacting surfaces of both the known cutting pair and the new one are interrelated in a special way. The character of this relation is such that in any point of their contact the length of an arc, belonging to a knife blade base (45), is proportionate to the length of a circle of the same radius, belonging to the plate working surface (40), the said circle being continuous or interrupted by orifices to pass meat.

A new feature of such a cutting pair variant is that the functional relation, connecting the interacting surfaces of the pair, is supplemented with a correcting function, considering the increase of pair part wear intensity in peripheral direction, and with the product of functions, considering the influence of the cutting elements of the pair on its wearing parts. At that, the ratio of the height of the plate ring projection (39) to the height of the knife blade figured projection (44) is proportionate to the volume ratio of these projections, multiplied by the arithmetic mean value of the total of correcting function values, calculated for the considered contact spots. Another new feature is that the constant of proportionality, relating the said parameters of the pair interacting surfaces, and the constant of proportionality, relating the heights of the pair wearing parts, correlate as the volumes of these parts.

Besides the above-said, a new feature in the third variant of the cutting pair is that the ratio of the height of the plate ring projection (39) to the height of the knife blade figured projection (44) is determined by the equation

$\delta_2 / \delta_1 = \dfrac{V_2}{V_1} \dfrac{l}{2\pi\rho}(1 - \sigma \cos\alpha)[\dfrac{1}{\tau}\sum\limits_{j=1}^{\tau}(1 + \varepsilon k \cos\beta)](1 + \xi \dfrac{\rho_i}{\rho})$. At that, in the area of orifices to pass meat the shape of the sole (45) of the knife blade figured projection (44) and the configuration of the plate working surface (40) are related by the equation

$l_i / \sum\limits_{j=1}^{\tau} l_{j,i} = \dfrac{l}{2\pi\rho}(1 - \sigma \cos\alpha)[\dfrac{1}{\tau}\sum\limits_{j=1}^{\tau}(1 + \varepsilon k \cos\beta)](1 + \xi \dfrac{\rho_i}{\rho})$, and in the continuous ring zones, bordering this area, the used functional relation has the form $\dfrac{l_i}{2\pi\rho_i} = \dfrac{l}{2\pi\rho}(1 - \sigma \cos\alpha)(1 + \xi \dfrac{\rho_i}{\rho})$. Here $f_2(x) = 1 - \sigma\cos\alpha$ is a correcting function, considering the wear intensity increase of the face working surface of the plate ring projection (39); $\sigma$ is an empirical coefficient; $\alpha$ is the angle between the radius $\rho_I$ and the tangent in the $i$-point to the line of the cutting edge (46) of the sole (45) of the knife blade figured projection (44); $f_3(x) = \dfrac{1}{\tau}\sum\limits_{j=1}^{\tau}(1 + \varepsilon k \cos\beta)$ is a correcting function, considering the wear of the sole (45) of the knife blade figured projection (44) with the front parts (41) of plate orifice edges; $\varepsilon$ is a coefficient, whose value within 1.0 - 1.2 depends on the tilt angle of the orifices to pass meat, made in the plate; $k$ is an empirical coefficient; $\beta$ is the angle between the radius $\rho_I$ and the tangent to the line of the front part (41) of the edge of a $j$-plate orifice to pass meat.

The peculiarity of the used cutting pair is that the material of the knife blade figured projection has greater hardness and endurance than the material of the plate ring projection.

Another new feature of the cutting pair is that the knife blade figured projection is made of an extra-hard material.

Yet another new feature of the cutting pair is that the material surface layer of the front part of the knife blade figured projection has glass-like structure.


**Brief Description of Drawings**

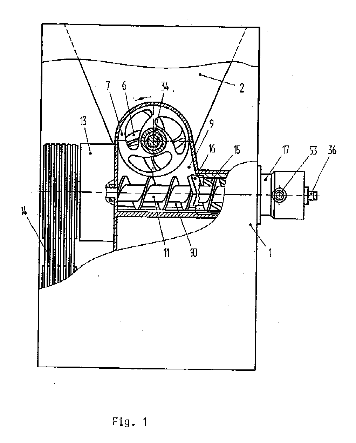

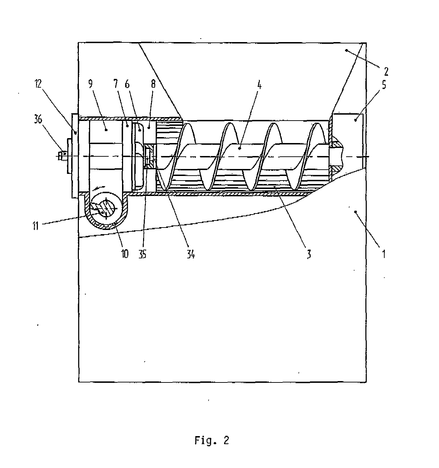

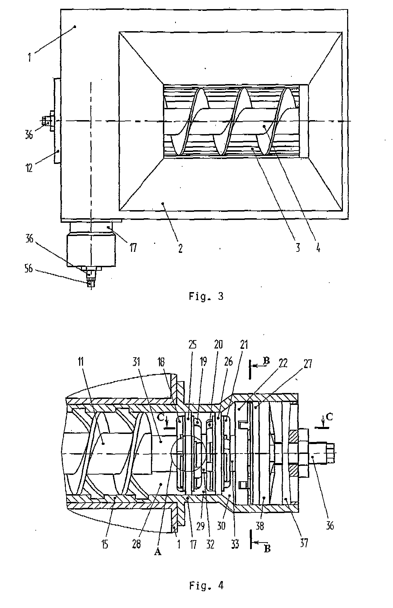

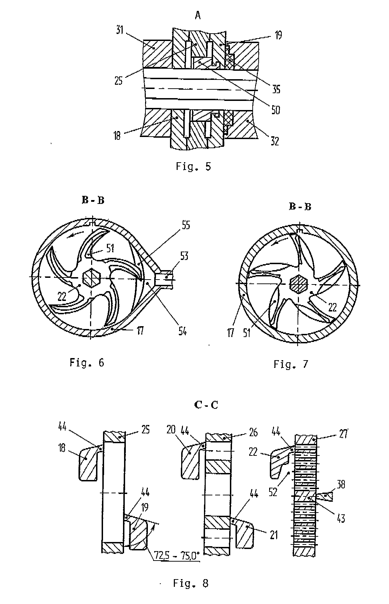

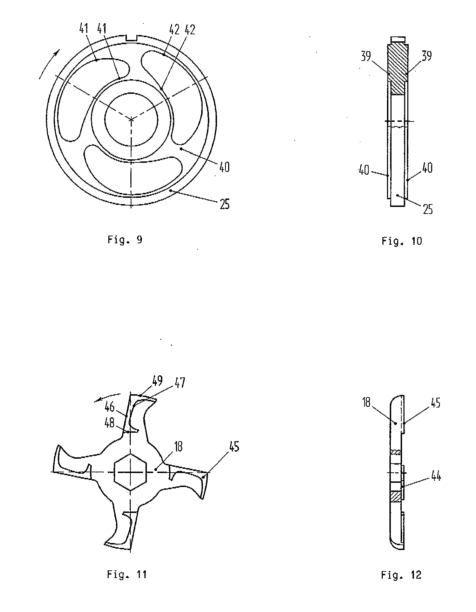

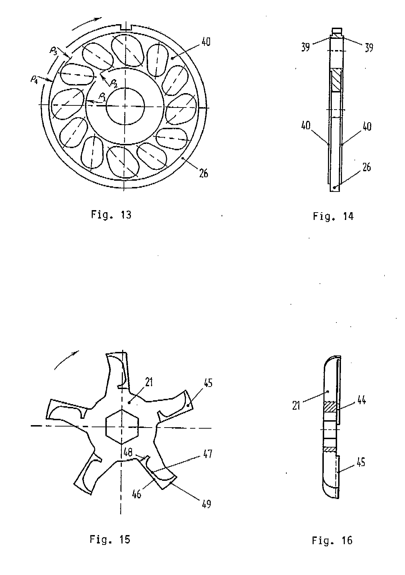

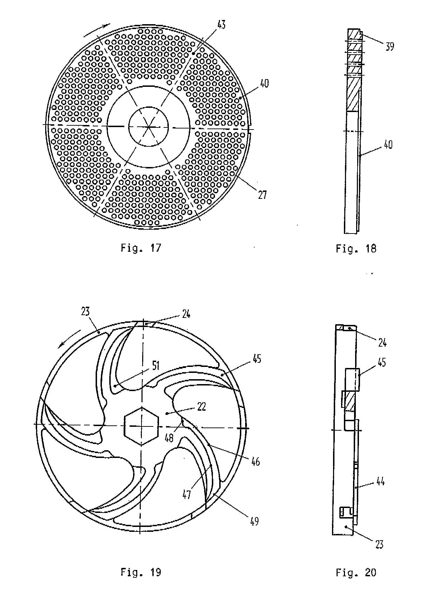

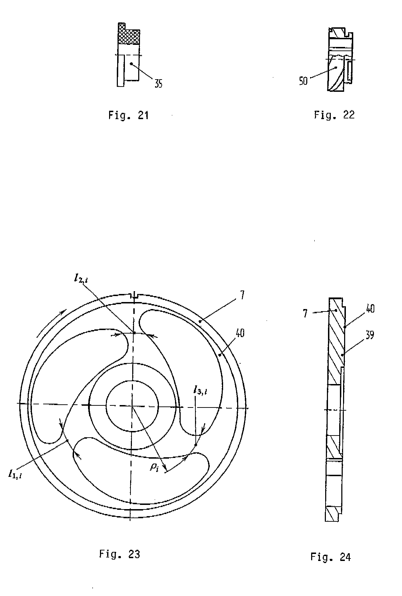

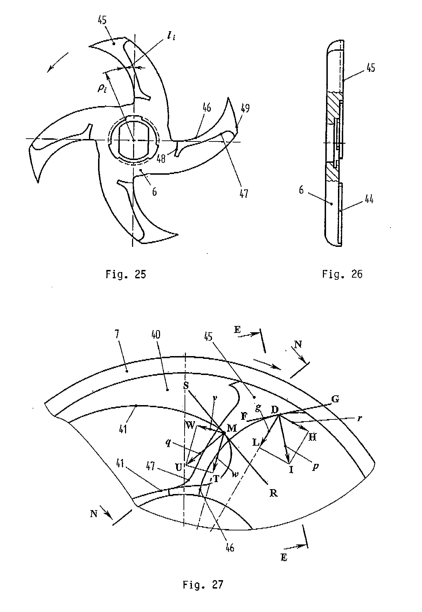

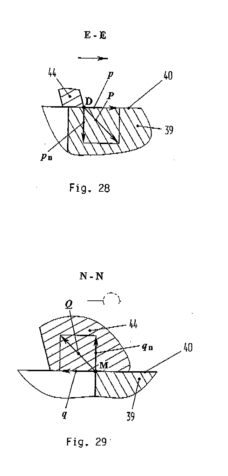

The essence of the invention is explained by the drawings, where fig. 1 shows the mincer, side view with the section of its feeding unit along the axis of the pressure screw; fig. 2 shows the same, front view with feeding unit section along the axis of the feeding screw; fig. 3 shows the same, view from above; fig. 4 shows the longitudinal section of the mincer cutting unit head; fig. 5 shows the A-view of fig. 4; fig. 6 shows the **B-B** section of fig. 4, variant 1; fig. 7 shows the **B-B** section of fig. 4, variant 2; fig. 8 shows the **C-C** section of fig. 4; fig 9 shows the receiving plate, front view; fig. 10 shows the same, side view; fig. 11 shows the right-hand receiving knife, view form its working surface; fig. 12 shows the same, side view; fig. 13 shows the intermediate plate, front view; fig. 14 shows the same, side view; fig. 15 shows the left-hand intermediate knife, view from its working surface; fig. 16 shows the same, side view; fig. 17 shows the cutting-separating plate, view from its working surface; fig. 18 shows the same, side view; fig. 19 shows the separating knife with a cylindrical rim, view from its working surface; fig. 20 shows the same, side view; fig. 21 shows the two-stage resilient element, side view; fig. 22 shows the friction bearing support sleeve of the inlet plate, receiving plate and intermediate plate, side view; fig. 23 shows the inlet plate of the feeding unit, view from its working surface; fig. 24 shows the same, side view; fig. 25 shows the right-hand inlet knife of the feeding unit, view from its working surface; fig. 26 shows the same, side view; fig. 27 shows forces, acting upon an elementary area of the plate working surface from the knife blade cutting edge, as well as forces, acting upon an elementary area of a knife blade sole from the front part of a plate orifice edge; fig. 28 shows the E-E section of fig. 27; fig.29 shows the N-N section of fig. 27.

## Best Variant of Invention Realization

The meat of large animals is processed by the suggested method in the following way.

Animal carcasses are cut into fragments, and meat is removed only from large bones. Meat is not trimmed absolutely. If necessary, meat is assorted to get higher-, first- and second-grade forcemeat during meat mincing. At dressing and trimming meat, it is not cut into parts, but the size of produced fragments is limited so that any of them could be placed between the feeding screw coils of the feeding unit of the special mincer, used at grinding meat by the new method.

Flesh, produced after removing meat from the largest bones, is loaded into the receiving funnel of the special mincer together with carcass fragments, being meat on bones. The mincer is switched on. Meat and bones, cartilages and tendons in it are cut into parts with an inlet knife, interacting with the inlet plate of the mincer feeding unit. At that, such pieces are produced, whose size allows placing them in spaces between the blade coils of the pressure screw catching part. Meat pieces, going out of receiving plate orifices, enter a chute, communicating the mincer receiving funnel with the barrel cavity of the pressure screw forcing part. Those meat piece parts, which do not fit in the barrel inlet, are cut off with a curved knife, interacting with the blade of the pressure screw catching part. Meat is forced into the cavity of the mincer cutting unit head with the pressure screw blade, interacting with the barrel, enclosing it. Here meat and accompanying bones, cartilages and tendons are cut into parts with unilateral receiving and intermediate knives, interacting with the receiving and intermediate plates, in four stages. Produced meat pieces go into the direct-flow chamber, situated first in the course of meat movement, and from this chamber they are delivered to the cutting-separating plate in a reciprocal mode. On this plate, interacting with the adjoining unilateral separating knife, the first stage of mechanical meat boning is performed, and meat is finally minced through cutting and separated. Bone pieces, scraps of cartilages and tendons and fragments of large vessels, films and structures, combining muscle cells into bundles, selected from meat, are discharged from the cutting unit head as primary separation products. Primary separation products are accumulated and afterwards they are additionally ground by the same special method, realized at using the same special mincer. Produced forcemeat, consisting of "friable" connective tissue particles with admixtures of muscular and adipose tissues, is used in foodstuff production as a natural protein additive instead of meat. To increase connective tissue food value this forcemeat is ground in a cutter, and the emulsion is processed with, e.g., lactic acid.

The mincer, designed for realizing the suggested meat mincing method, is shown in fig. 1 - fig. 3. In its housing (1) there is a receiving funnel (2), in whose bed (3) the catching part blade of a feeding screw (4) is situated. The feeding screw (4) is connected with an adjustable drive (5). By means of the shank of the feeding screw (4) the drive (5) rotates an inlet knife (6), adjoining an inlet plate (7). By another variant of mincer design the inlet knife (6) is directly connected with the drive (5) (such a variant of the feeding unit is not shown in the drawings). The inlet knife (6) and the inlet plate (7) are installed with the formation of a direct-flow chamber (8). By another variant of mincer feeding unit design there is no direct flow chamber (8) (such a variant of the feeding unit is not shown in the drawings). Behind the inlet cutting pair of the mincer feeding unit there is a chute (9). In the chute (9) a pressure sensor is installed, used in the mincer automation system (the pressure sensor is not shown in the drawings). In the bed (10) of the chute (9) there is the catching part blade of a pressure screw (11). The feeding screw (4) and the pressure screw (11) are situated at different levels, and in relation to each other they are installed at an angle of 90 degrees. Another position of the feeding screw (4) and the pressure screw (11) is possible. In this case their axes are in the same vertical plane or in a plane, tilted to the horizon at an angle greater than the natural slope angle of minced meat pieces (such variants of mincer feeding unit arrangement are not shown in the drawings). Access to the inlet cutting pair is possible through an orifice in the housing (1), which is closed with a hatch (12), fixed by means of bayonet connection (the bayonet connection is not shown in the drawings). Fig. 1 and fig. 2 show the pressure screw (11), whose catching part blade has one thread. By another variant of mincer design the catching part blade of the pressure screw (11) can be made two-thread (the pressure screw with a two-thread catching part blade is not shown in the drawings). By means of a reducer (13) and belt transmission (14) the pressure screw (11) is connected with an electric motor (the rotation drive electric motor of the pressure screw (11) is not shown in the drawings). Enabling and disabling the rotation drive electric motor of the pressure screw (11) is done in response to the signal of the pressure sensor, installed in the chute (9) of the mincer feeding unit. The forcing part blade of the pressure screw (11) is installed in a barrel (15), enclosing it. The barrel (15) is equipped with a curved knife (16), made in the form of a pipe piece with a longitudinal slit. The mincer feeding unit can be equipped with a similar curved knife, enclosing the catching part blade of the feeding screw (4) (such a variant of the mincer feeding unit is not shown in the drawings). The blade of the curved knife (16) is V-shaped (see fig. 1). By another design variant of the curved knife (16) its blade has a chamfer, directed towards the meat stream (the curved knife (16) with a chamfered blade is not shown in the drawings). The barrel (15) and the forcing part blade of the pressure screw (11) are the elements of a screw pump, meant for forcing meat into the cavity of the mincer cutting unit head (17). In the cutting unit head (17) there are five unilateral knives, put on the shank of the pressure screw (11). These are a right-hand receiving knife (18), a left-hand receiving knife (19), a right-hand intermediate knife (20), and a left-hand intermediate knife (21), as well as a right-hand separating knife (22), installed last in the course of meat movement. The blades of the right-hand separating knife (22) are curved or tilted in direction opposite to that of its rotation (see fig. 6 and fig. 19). By another variant the blades of this knife are curved or tilted in opposite direction (see fig. 7). In the first case the right-hand separating knife (22) may be made with a rim (23), in which there are ports (24) (see fig. 19 and fig. 20). By yet another blade design variant of the right-hand separating knife (22) they are curved or tilted in direction opposite to that of its rotation, but in this case the knife has no rim (see fig. 6). The knives (18) - (22) correspondingly adjoin a receiving plate (25), an intermediate plate (26), and a cutting-separating plate (27). In the cutting unit head (17) the plates (25) - (27) and the knives (18) - (22) are installed with formation of direct-flow chambers (28) - (30) (see fig. 4). By one of the variants of mincer cutting unit design the receiving plate (25) is installed directly near the blade face of the pressure screw (11). In this case the direct-flow chamber (25) and the right-hand receiving knife (18) are absent (such a variant of cutting unit design is not shown in the drawings). By another design variant of the suggested cutting unit the receiving knife (25) and the intermediate plate (26) are installed without formation of a direct-flow chamber (29). In this case a bilateral knife is used instead of unilateral knives (19), (20) (such a variant of cutting unit design is not shown in the drawings). Between the blade face of the pressure screw (11) and the hub of the right-hand receiving knife (18), as well as between the hubs of the knives (19), (20) and (21), (22) sets of spreading sleeves (31), (32) and (33) are pressed. Another set of spreading sleeves (34) is pressed between the blade face of the feeding screw (4) and the hub of the right-hand receiving knife (6). The set of the spreading sleeves (31) - (34) includes one or two resilient elements (35) (see fig. 2, fig. 5). Each resilient element (35) has the form of a two- or three-stage disc (see fig. 21). The sets of spreading sleeves (31) - (33), (34) are the components of devices, meant for automatically pressing the knives (6), (18) - (22) to the plates (7), (25) - (27). Besides the sets of the spreading sleeves (31) - (34), the devices, meant for automatically pressing the knives to the plates, include forcing screws (36), shown in fig. 1 - fig. 4. One of the forcing screws (36) is screwed into a stationary clamping spider (37). In the cutting unit head (17) the stationery clamping spider (37) is fixed by means of bayonet connection (the bayonet connection is not shown in the drawings). At assembling the mincer cutting unit the knives (18) - (22) are pressed to the plates (25) - (27) by means of a forcing screw (36), resting against the movable clamping spider (38) and, at that, the resilient elements (35) are compressed. By means of another forcing screw (36) the inlet plate (7) is pressed to the inlet knife (6), and the resilient element (35) of the set of spreading sleeves (34) is compressed. Due to the energy, accumulated by the resilient elements (35), an operation to automatically press the knives to the plates is performed. The multistage form of the resilient elements (35) allows reducing the amplitude of knife blade axial oscillations, occurring at cutting up hard meat components, going in or out of the orifices of the inlet plate (7), the receiving plate (25) and the intermediate plate (26). This minimizes force imbalance, resulting from such cutting pair wedging.

The wearing parts of the plates (7), (25) - (27) have the form of ping projections (39), whose faces are their working surfaces (40). The ring projections (39) enclose the area of orifices to pass meat, made in the plates, as well as two continuous ring zones, enclosing this area, whose radii are denoted with the symbols $\rho_1$ - $\rho_4$ in fig. 13. The edges of plate orifices, through which minced meat goes at mincer operation, have front parts (41) and rear parts (42) (see fig. 9 and fig. 27). The front parts (41) differ from the rear parts (42) in that their bulges are directed in the rotation course of the adjoining knives. The bulge tops of the front parts (41) of the edges of orifices to pass meat, made in the inlet plate (7), the receiving plate (25) and the intermediate plate (26), are displaced to their centers (see fig. 9, fig. 13 and fig. 23). The blades of the inlet knife (6) are curved or tilted in the direction of its rotation (see fig. 25). The blades of the receiving knives (18), (19) and the intermediate knives (20), (21) can also be curved or tilted in the direction of their rotation (the receiving and intermediate knives with tilted or curved blades are not shown in the drawings). Such design of the said plates and knives allows greatly reducing peak surges of electric power, consumed by the mincer at the moments of grinding hard components of minced meat. The flow area of, at least, one orifice to pass meat, made in the intermediate knife (26), is 1.5-3.0 greater than the area of its other orifices (see fig. 13). The front parts of the edges (41) of such an orifice mince large fragments of bones, cartilages and tendons, going from the direct-flow chamber (29). The cutting-separating plate (27) has radial areas (43), within which there are no orifices to pass meat. The radial areas (43) of the cutting-separating plate (27) are adjoined by the arms of the movable clamping spider (38).

The front blade angle of the knives (6), (18) - (22) is 72.5 - 75.0° (see fig. 8), and their wearing parts have the form of figured projections (44). The figured projections (44) and the plate ring projections (39) form cutting pairs. The shape of the sole (45) of each of the blade figured projections (44) of the knives (6), (18) - (22) is functionally related with the configuration of the adjoining working surface (40) of a corresponding plate (7), (25) - (27). The form of this functional relation will be shown below. If the shank friction bearings of the feeding screw (4) and the pressure screw (11) are not worn, the cutting edges (46) and the rear edges (47), as well as the smaller arched bases (48) and the larger arched bases (49) of the soles (45) are in contact with the working surfaces (40) of the plate ring projections (39). In such a case the radii of the arched bases (48), (49) of the soles (45) are equal to the radii $\rho_1$ and $\rho_4$ of the smaller and larger circles, limiting the working surfaces (40) of the projections (39) of corresponding plates. However, such a case is possible only if there is no knife precession. In practice, the friction bearings of knife pin supports are worn to some extent, and the precession of knife axes takes places in most cases. Due to this circumstance the knife blade figured projections (44) can be alternately displaced in axial and peripheral directions (such knife design is not shown in the drawings).

Into the central orifices of the inlet plate (7), the receiving plate (25) and the intermediate plate (26) there are inserted friction bearing support sleeves (50), having the possibility of rotating together with the shanks of the feeding screw (4) and the pressure screw (11). Each friction bearing support sleeve (50) is attached to the adjoining knife by means of bayonet connection. By one of the design variants of the suggested special mincer cutting unit a removable roller bearing is inserted into the central orifice of the movable clamping spider (38) (the roller bearing is not shown in the drawings).

The suggested mincer cutting unit includes a minced meat separator. The cutting-separating plate (27) and the right-hand separating knife (22) are the separator working organs. There are three design variants of the cutting-separating plate (27). By one of them, all the orifices to pass meat have equal diameters. By another design variant of this plate the diameter of, at least, one fifth of orifices to pass meat, situated in its peripheral area, is 70-90% of the diameter of the other orifices to pass meat (the second design variant of the cutting-separating plate is not shown in the drawings). There is yet another design variant of the cutting-separating plate (27). In this case the diameter of, at least, one fourth of the orifices to pass meat, situated in its central ring zone, is 70-90% of the diameter of its other orifices. The cutting-separating pair is installed at the end of the direct-flow chamber (30), which is last in the course of meat movement. The blades of the right-hand separating knife (22) are made with longitudinal recesses (51), which widen in direction opposite to that of blade circular movement. The longitudinal recesses (51) and the working surface (40) of the cutting-separating plate (27) form rotated discharge channels (52), shown in fig. 8. At mincer operation, through the ports (24) of the rim (23) of the separating knife (22) the discharge channels (52) communicate the zones of the direct-flow chamber (30), adjoining the cutting-separating plate, with the radial discharge branch (53) (see fig. 1 and fig. 6). In this case a cutting-separating plate, made by the first or second variant, is used, and in the head (17) there is a pit (54). In front of the pit (54) in the path of the meat stream, directed to the cutting-separating plate (27), a shield (55) can be installed (see fig. 6). The minced meat separator can be made by another variant. In this case it has an axial discharge branch (56) (see fig. 3), with which the discharge channels (52) are communicated through the central orifice of the cutting-separating plate (27). The minced meat separator, having an axial discharge branch (56), is equipped with a cutting-separating plate (27), made by the first or third variant. The radial discharge branch (53) (as well as the axial discharge branch (56), if the separator is made by the second variant) is equipped with automated shutoff and control valves (the automated shutoff and control valves of the discharge branches are not shown in the drawings).

At designing the suggested mincer cutting pair the following circumstances have been taken into account.

In response to the squeezing effort in the contact spot of any elementary area of the sole (45) of a rotated knife blade figured projection (44) and an elementary area of the plate working surface (40) a counterforce appears, which is usually called normal reaction. The product of the normal reaction by the coefficient of sliding friction gives sliding friction force $\boldsymbol{F}$ (the force $\boldsymbol{F}$ is not shown in the pictures). The force F is perpendicular to the radius of its application point and directed opposite to the relative movement of this point. The influence of the sliding friction force F leads to the surface layer material destruction of the plate ring projection (39). This process should be organized so that the plate working surface (40) should always stay flat. For this purpose it is necessary to eliminate the effects of those factors, which cause flatness breaking of knife blade soles (45).

The knife blade sole (45) can be presented as an infinite number of mutually adjoining elementary arched areas, the width of each of which is equal to the difference between the radii of arcs, being its bases. As it will be shown below, the length of the arched bases of such areas is a variable value. However, due to that the difference between the radii of the elementary arched area bases of the sole (45) is infinitely small, the base lengths can be considered equal to the length of an arc $l_i$, having radius $\rho_i$ (see fig. 25). Thus, the area of any elementary area of the sole (45) is proportionate to the length of an arc $l_i$, characterizing it. On the other hand, the length of any arc $l_i$ corresponds to the width of a sole (45), measured in an $i$-point, belonging to it. Thus, the length of any arc $l_i$ is a design parameter, which can be used in designing a developed knife. Indeed, if the shape of a knife blade cutting edge (46) is preset, and the lengths of arcs $l_i$ for every radius $\rho_i$ are calculated, it is possible to determine the configuration of the knife blade sole (45) and then find the shape of its figured projection (44) and design a knife by the graphical construction method. If, at that, to correspondingly change the lengths of the arcs $l_i$, the sole (45) can be given a special shape, which would ensure retaining the flatness of the cutting pair wearing surfaces.

In the steady-state conditions of mincer operation the abrasion intensity of any arched elementary area of the knife blade sole (45) depends on the length of the path, made by it on the plate working surface (40). There is only one way to even out the wear intensity of all such areas: their lengths should be brought into correspondence with the lengths of those paths, which each of them makes on the plate working surface (40) at one knife turn. At one knife turn an arched base (48) or (49) of the sole (45), having radius $\rho$ and length $l$, makes a path equal to $2\pi\rho$, m on the face of the plate ring projection (40). At the same knife turn, the path length of an arc $l_i$ is equal to the length of a circle, situated on the plate working surface (40), the said circle being continuous or interrupted by orifices to pass meat. So, if an $i$-elementary contact spot is within one of the zones, bordering the area of orifices to pass meat, this path length is $2\pi\rho_i$. In the central area of the ring projection (39) the arc $l_i$ will meet r orifices to pass meat, between which there are $\tau$ arcs $l_{j,i}$ (see fig. 23).

Thus, in the plate central area at one knife turn the arc $l_i$ makes a path, equal to $\sum_{j=1}^{n} l_{j,i}$, m. The circle $2\pi\rho$ and the arc sum $\sum_{j=1}^{n} l_{j,i}$ characterize an infinite number of those elementary areas of the plate working surface (40), which abrade an $i$-elementary area of the sole (45), going on them. On the other hand, the values $2\pi\rho_i$ and $\sum_{j=1}^{n} l_{j,i}$ are the basic design parameters of the developed plate wearing part. Comparing the preset length of an arc $l$ and lengths of arcs $l_i$, calculated for the central and outside areas of a pair, with the lengths of their path on the surface of the plate wearing part, we get equations

$$l_i = \frac{l}{2\pi\rho} \cdot \sum_{j=1}^{\tau} l_{j,i} \text{ , м}$$

[2]

and

$$l_i = l \frac{\rho_i}{\rho} \text{ , м,} \qquad\qquad [3]$$

letting us create a mincer cutting pair, the abrasion intensity of the interacting surfaces of which will be the same in the whole of the contact area.

In the process of suggested cutting pair running the flatness of its interacting surfaces should not be broken. Thus, the cutting edge (46) cannot be beyond the sole (45). Nevertheless, at mincer operation the cutting edge (46) cuts off the surface layer material of the plate ring projection (39), i.e., in fact, digs into it. This seeming controversy can be explained in the following way.

From the thermodynamics of surface effects it is known that the result of interfacial tension effects is that molecules on the surface of any body are different from its other molecules in that they have increased free energy. The cutting edge (46) of the sole (45) is a rib, formed by the crossing of two extreme rows of elementary areas. One of these rows is situated immediately on the sole (45), and the other one is on the adjoining front surface of a knife blade figured projection (44). The intermolecular force resultants of crossing elementary area rows, forming the cutting edge (46), are directed into the body of the figured projection (44). The angle between any pair of such resultants corresponds to the front angle of this projection (see fig. 8). The resultant force, made by summing up pairs of resultants, is applied to the cutting edge (46) of the sole (45) and also directed into the body of the figured projection (44). This force is greater than any of its component resultants, so molecules, forming the cutting edge (46), have much more free energy than neighbouring molecules, forming the sole (45). From the thermodynamics of surface effects it is also known that the surface energy increase of one of the bodies, brought into contact with another body, leads to the occurrence of wedging pressure. Thus, the free energy excess of the cutting edge (46) leads to the surge occurrence of pressure $P$, with which the considered elementary zone of the cutting edge (46) acts upon the adjoining elementary area of the plate working surface (40) at any given moment. In fig. 27 and fig. 28 such a pair contact spot is marked with the point $D$. In these pictures there are: 1) a fragment of the inlet plate (7); 2) the sole (45) with a concave cutting edge (46), as well as 3) the E-E-section of the cutting pair. At mincer operation the vector of the excess specific pressure $P$ is directed into the body of the plate ring projection (39) at an angle equal to half the front angle of the knife blade figured projection (44). As the considered cutting pair parts are macroobjects, the surge value of the pressure $P$ is not great if compared with the above-considered force $F$. However, the action of the force $P$ should not be neglected, as the suggested mincer cutting pairs are designed for continuous running without intermediate sharpening. The force $P$ is within the plane E-E, which crosses the line GF, touching the cutting edge (46), at an angle of 90°. In the same plane there are the normal component $p_n$ and the surface component $\rho$ of the force $P$. The direction of the normal component $p_n$ coincides with the normal reaction direction of a corresponding elementary area of the plate working surface (40), which results from squeezing the cutting pair. The product of the force $p_n$ by the sliding friction coefficient gives an extra sliding friction force $f$ (the force $f$ is not shown in the drawings). This force increases the wear intensity of the plate working surface (40) with those elementary areas of the knife blade figured projection (44), which form its cutting edge (46). It is easiest to consider the influence of the extra sliding friction force $f$ on cutting pair wear by means of using coefficients, determined on the basis of experimental data.

Further speculations, concerning the action mechanism of the force **P,** are based on assumption that the front part surface of the knife blade figured projection (44) has no roughness and no steps. In such an ideal case the value of the force **P** and, thus, the value of its projection p will not depend either on the shape of the cutting edge (46) or on the location of the point **D**. In the rectangular coordinate system, superposed with the plate working surface (40), the surface force $\rho$ is decomposed into an axial component $g$ and a tangential component $r$ (see fig. 27). The force $g$ does not take part in abrading the plate ring projection (39), as it tends to move an elementary area, belonging to the plate working surface (40) and situated in the point **D**, towards the pair axis. The tangential component $r$ is that part of the force $p$, under whose action an $i$-elementary part of the cutting edge (46) cuts off elementary areas, being in its way and belonging to the working surface (40) of the plate ring projection (39). The intensity of this process is determined by the relation $r/p$, which is equal to the value of $\cos\alpha$, where $\alpha$ is $\angle$ **HDI** or, which is more convenient, $\angle$ **LDF**. In other words, $\alpha$ is an angle which is enclosed between the radius of the point D and the line **GF**, touching the cutting edge (46) in this point. Of course, if the cutting edge (46) is made straight-line and situated radially, $\cos\alpha = 1$ и $r = p$. In such a case knife blade cutting edges (46) will cut the plate working surface (40) with equal intensity in all the adjacency points. At any other attitude of the straight-line cutting edges (46) (as well as at their any other configuration), the wearing of the ring projection (39) will go on unevenly: the knife blade cutting edges (46) will soon become convex and, on the contrary, the plate ring projection (39) will become concave. It is possible to avoid breaking the flatness of cutting pair interacting surfaces. For this purpose, in certain places it is necessary to change the intensity of their friction wear, i.e. knife blade figured projections should be narrowed in a certain way. To this end, a correcting function $f_1(x) = 1 - \sigma\cos\alpha$ is entered into the right part of the equations [2], [3], where $\sigma$ is a coefficient, whose value depends on a number of factors, not concerning the design peculiarities of the cutting pair. In particular, such factors are the front part surface condition of the knife blade figured projection (44), pair running conditions, as well as the physical properties of materials of which its wearing parts are made. The value of the coefficient $\sigma$ is determined on the basis of experimental data and, thus, includes a correction for abrading the plate working surface by the extra sliding friction force $f$.

In every elementary contact patch of cutting pair interacting surfaces the abrasion of the rotated knife blade figured projection (44) happens under the influence of the sliding friction force $F_1$ (the force $F_1$ is not shown in the drawings). The sliding friction force $F_1$ is equal in its value to the above-considered force $F$, but has opposite direction). The force $F_1$ acts in the whole path of an $i$-elementary contact patch on the plate working surface (40). Its effect also occurs at crossing the front parts (41) of the edges of orifices to pass meat. However, the latter are special zones, that is why their contribution to abrading the figured projections (44) should be considered separately.

The edge front part (41) of any plate orifice, meant for passing meat, is a total of elementary zones, each of which has radius $\rho_i$. At mincer operation any such elementary zone, e.g., that in the point **M** (see fig. 27 and fig. 29), interacts with an adjoining elementary area, belonging to the sole (45). Within the sole (45) the elementary contact patch **M** moves along an arc $l_i$. In the contact spot **M** the pressure of the plate on the knife is greater than in points, which are distant from the orifice edge front part (41). As in the above-considered case, such a pressure surge is explained by a special character of intermolecular interaction on the borders of phase separation. The free energy excess of molecules, of which the front part (41) of a plate orifice edge is composed, leads to the local increase of plate pressure on the sole (45). In fig. 27 the pressure surge is presented as a force **Q**, applied to the point **M** of the knife blade sole (45). This force is in the plane N-N, perpendicular to the sole (45). At that, the plane **N-N** crosses the line **RS** at an angle of 90°, the said line touching the front part (41) of a plate orifice edge in point **M.** Fig. 29 shows two projections of the force **Q** - vectors $q_n$ and $q$, which are also in the plane **N-N**. The normal component $q_n$ of the force **Q,** multiplied by the friction coefficient, gives the sliding friction force $f_1$ (the force $f_1$ is not shown in the drawings). The force $f_1$ and the sliding friction force $F_1$ are summed up, as they have the same directions. However, the influence of the extra friction force $f_1$ on the considered elementary area of the sole (45) occurs only at those moments, when this area passes the area of the front parts (41) of plate orifice edges. It is easiest to determine the influence of the extra sliding friction force $f_t$ on the wear of the sole (45) on the basis of experimental data.

In the rectangular coordinate system, superposed with the plane of the sole (45), the force q is decomposed into an axial component $w$ and a tangential component $v$. The axial component w tends to move the elementary area of the sole (45), situated in the point M, towards the centre of the cutting pair, so its influence is not accompanied by the wear of the sole (45). The tangential force $v$ is, in fact, the cutting force. Under its influence an elementary zone, belonging to the front part (41) of a plate orifice edge, digs into the material of a knife blade figured projection (44) and cuts off its surface layer. The intensity of this process is determined by the relation $v/q$, i.e. by the value of $\cos\beta$. Here $\beta$ is $\angle$**UMW**

or, which is more convenient, $\beta$ is $\angle$**RMT,** i.e. $\beta$ is an angle between the radius $\rho_i$ of the point **M** and the line **RS,** touching the front part (41) of a plate orifice edge in this point. If not to consider the influence of the plate cutting elements on the figured projection (44), curvilinear grooves will appear in its body, and reciprocal bulges of the plate ring projection (39) will be situated in these grooves. To compensate such unevenness of cutting pair wear it is necessary to correspondingly change the intensity of abrading the knife blade figured projection (44) with the plate working surface (40), i.e. to widen its sole (45) in certain places. To this end, into the right part of the equation [2] a multiplier, having the form of

$$f_2(x) = \frac{1}{\tau} \sum_{j=1}^{\tau} (1 + \varepsilon k \cos \beta),$$ is entered, where $\varepsilon$ is an "angle" coefficient and $k$ is an empirical coefficient. The value of the coefficient $\varepsilon$ depends on the inclination angle of orifices to pass meat, made in the plate. If the axes of these orifices are perpendicular to the plate working surface (40), the value $\varepsilon$ should be taken equal to one. If the axes of orifices to pass meat form sharp angles with the plate working surface (40), the value of the coefficient $\varepsilon$ grows up to 1.10 - 1.20. The value of the coefficient $k$ depends on the ratio of plate orifice total area to the area of the plate wearing surface, on cutting pair running conditions and also on the physical properties of its wearing part materials. As the coefficient $k$ is determined on the basis of experimental data, its acquired value considers that wear of the sole (45), which is determined by the influence of the extra sliding fiction force $f_1$.

Crossing the rear parts (42) of plate orifice edges, an elementary area of the sole (45) is also influenced by increased plate pressure. However, in this case both the vector of the excess pressure and the extra sliding friction force $f_1$, determined by it, and the cutting force $v$ are directed not towards knife movement but in opposite direction. In this respect, it is possible to neglect the wear of knife blade figured projections (44) by the rear parts (42) of plate orifice edges.

The abrasion intensity of knife blade figured projections (44) increases in peripheral direction. This is explained, first, by worsening heat exchange conditions between soles (45) and the plate working surface (40) due to the linear component increase of knife blade circular movement speed. Second, at suggested cutting pair running, force unbalance slightly occurs, causing increased peripheral wear of its parts. The correcting function $f_3(x) = 1 + \xi \frac{\rho_i}{\rho}$ allows eliminating wear unevenness, caused by the above-said circumstances. Here $\xi$ is a coefficient, whose value, determined on the basis of experimental data, depends on the running conditions of the cutting pair, as well as on its dimensions.

With the correcting functions $f_1(x)$ - $f_3(x)$ taken into account, the basic equation [1], [2] acquires the form:

$$l_i = \left(\frac{l}{2\pi\rho} \sum_{j=1}^{\tau} l_{j,i}\right)(1 - \sigma \cos \alpha)\left[\frac{1}{\tau} \sum_{j=1}^{\tau}(1 + \varepsilon k \cos \beta)\right]\left(1 + \xi \frac{\rho_i}{\rho}\right), \text{ m,} \qquad [4]$$

and

$$l_i = l\frac{\rho_i}{\rho}(1 - \sigma \cos \alpha)\left(1 + \xi \frac{\rho_i}{\rho}\right), \text{ m.} \qquad [5]$$

The produced expressions allow determining the shape of the knife blade sole (45) by a preset configuration of the plate working surface (40), as well as considering the influence of all the factors whose effects are accompanied by breaking their flatness. The configuration of the working surface (40) of any plate is described by the relation $\sum_{j=1}^{\tau} l_{j,i} = f(\rho_i)$; on the whole, it grows in peripheral direction. However, any plate has, at least, one part within which the value $\sum_{j=1}^{n} l_{j,i}$ decreases. The shape of the sole (45) of a suggested knife blade changes in the same way: it widens in peripheral direction but has, at least, one part, narrowing in the same direction.

Dividing the equation [4] by $\sum_{j=1}^{n} l_{j,i}$ and the equation [5] by $2\pi\rho_i$, we get two relations

$$l_i / \sum_{j=1}^{\tau} l_{j,i} = \frac{l}{2\pi\rho}(1 - \sigma \cos \alpha)\left[\frac{1}{\tau} \sum_{j=1}^{\tau}(1 + \varepsilon k \cos \beta)\right]\left(1 + \xi \frac{\rho_i}{\rho}\right)$$

[6]

and

$$\frac{l_i}{2\pi\rho_i} = \frac{l}{2\pi\rho}(1 - \sigma\cos\alpha)(1 + \xi\frac{\rho_i}{\rho}),$$

[7]

relating the basic parameters of the interacting surfaces of the designed cutting pair. According to the equations [6], [7], the ratio of the length of any arc $l_i$, belonging to the sole (45), to the length of a circle, continuous or interrupted by orifices to pass meat and belonging to the plate working surface (40), is proportionate to the product of the values of the correcting functions $f_1(x)$, $f_2(x)$, $f_3(x)$ and $f_1(x)$, $f_3(x)$, calculated for the considered contact spot of the interacting surfaces.

Let's take the height of the knife blade figured projection equal to $\delta_{1,i}$ and the height of the plate ring projection equal to $\delta_{2,i}$. Let's divide the wearing parts of the designed cutting pair into $n - 1$ zones, the greater and smaller radii of each of which are, correspondingly, $r_{i+1}$ and $r_i$. In these conditions the volume of an $i$-arched zone of the knife blade figured projection and that of the plate ring projection zone, continuous or interrupted by orifices to pass meat, is, correspondingly,

$V_{1,i} = l\delta_{1,i}(r_{i+1} - r_i)$ and $V_{2,i} = \delta_{2,i}(r_{i+1} - r_i)/\sum_{j=1}^{\tau} l_{j,i}$, m³. Dividing the first expression by the second one, we get $l_i / \sum_{j=1}^{\tau} l_{j,i} = \frac{l}{2\pi\rho}(1 + \xi\frac{\rho_i}{\rho})$.

In designing the suggested cutting pair it is necessary to choose the endurance of each of its parts. At that, it is advisable to use the relation $mV_{1,l} = \psi V_{2,l}$, where $\psi$ is a coefficient, whose value determines cutting pair endurance, and m is the number of knife blades. Comparing two last equations, we get the dependence $\delta_{2,i} / \delta_{1,i} = \frac{\grave{o}}{\psi}(l_i / \sum_{j=1}^{\tau} l_{j,i})$, which allows creating cutting pairs with any endurance of each of its wearing parts. Inserting corresponding values of the relations $l_i / \sum_{j=1}^{\tau} l_{j,i}$ into this dependence, we get:

$$\delta_{2,i} / \delta_{1,i} = \frac{\grave{o}}{\psi}\frac{l}{2\pi\rho}$$

[8]

$$\delta_{2,i} / \delta_{1,i} = \frac{\grave{o}}{\psi}\frac{l}{2\pi\rho}(1 + \xi\frac{\rho_i}{\rho})$$

[9]

$$\delta_{2,i} / \delta_{1,i} = \frac{\grave{o}}{\psi}\frac{l}{2\pi\rho}(1 - \sigma\cos\alpha)[\frac{1}{\tau}\sum_{j=1}^{\tau}(1 + \varepsilon k\cos\beta)](1 + \xi\frac{\rho_i}{\rho}).$$

[10]

One of the peculiarities of the designed cutting pair is that the blade figured projections (44) of the knives (6), (18) - (22) are made of a material, having greater hardness and endurance, than the material of the ring projections (39) of the plates (7), (25) - (27). In particular, the blade figured projections (44) of the separating knife (22) can be made of an extrahard material. At that, the shape of the figured projections (44) can be calculated by a simplified equation $l_i / \sum_{j=1}^{n} l_{j,i} = l / 2\pi\rho$. Besides, by one of the design variants of the cutting pair, the surface layer of the front part (50) of the knife blade figured projection (45) may have glassy structure.

The equations [4], [5] allow designing new mincer cutting pairs of any dimensions and of any purpose. A new computer program has been designed, the said program being a part of a system for automatically designing new generation cutting tools. Before downloading the program, the designing programmer chooses initial parameters of the designed cutting pair. For the plate these are the lengths of the circles, limiting the face of its ring projection (39) in space, as well as the number, shape, dimensions and positional relationship of its orifices, meant for passing minced meat. For the knife these are the radius and length of, for example, the smaller base (48) of a sole (45), as well as the shape and spatial position of its cutting edge (46). The initial parameters of the plate and knife are entered into the computer in the form of corresponding equations. The centers of both parts of the cutting pair are superposed. Then the plate working surface (40) is divided into $n - 1$ ring zones. Depending on the pair dimensions and the plate type, the width of each of such zones is from 0.01 to 0.5 mm. The crossing points of the cutting edge (46) with circles, delimiting $n - 1$ ring zones, give $n$ $i$-design points. The program provides for turning the cutting edge (46) at 360 degrees with simultaneous scanning the plate working surface (40). At that, for any $i$-point the values of parameters, included in the right parts of the equations [5] and [6], are first computed, and then the lengths of arcs $l_i$ are calculated. The images of n arcs $l_i$ are attached to the line of the cutting edge (46) in certain places. Connecting the free ends of the arcs $l_i$ one gets the line of the rear edge (47), with which constructing the image of the sole (45) is finished. The determined shape of the sole (45) is estimated to find out whether it is possible to make a knife blade figured projection (44) in a numerical control machine. If necessary, a special correcting subprogram, providing for smoothing the rear edge (47), is used. At that, the shape, dimensions and (or) positional relationship of plate orifices are changed. Then the shape of the sole (45) is determined again. As a rule, the configuration of cutting pair interacting surfaces has to be corrected several times. The parameters of the corrected images of the plate working surface (40) and the sole (45) of the knife blade figured projection (44) go to the computer of the mechanics designer, who creates an electronic model of the knife and its working drawings.

At the operation of mincer cutting pairs, made with the use of the equations [3], [4], the flatness of their wearing part surfaces is not practically broken despite a number of accepted simplifications. The inaccuracies are eliminated in the process of adjusting their manufacturing technology, as at determining the numerical values of the coefficients $\sigma$, $\varepsilon$, $k$ and $\xi$ the method of consecutive approximation is used.

The new mincer cutting tools allow making forcemeat, whose quality does not change in the course of time absolutely. At that, due to that the effort of pressing the knives to the plates is always maintained at a preset level, the iron content in forcemeat is reduced to a minimally possible level.

At processing meat of large animals by the new method it is minced in the following way.

The mincer operator loads fragments of animal carcasses in the form of meat on bones, as well as flesh, produced at removing meat from the largest bones, into the receiving funnel (2). Then the operator presets one of the operation modes of the minced meat separator and turns on the drive (5) of the feeding screw (4), using the keypad of the mincer control panel. With the feeding screw (4) meat is delivered into the direct-flow chamber (8), from which it is supplied to the inlet plate (7). Meat fragments together with bones, cartilages and tendons, passed through the orifices of the inlet plate (7), are cut into parts. At that, there are used periodically closing up cutting elements of the cutting pair, namely, the orifice edge front parts (41) of the plate (7) and the blade cutting edges (46) of the rotated inlet knife (6). At the entrance of the inlet plate (7) there are produced meat pieces, whose size allows placing them in the interturn spaces of the blade catching part of the pressure screw (11). The chute (9) and the blade interturn spaces of the catching part of the pressure screw (11) are filled with produced meat pieces. As soon as the meat pressure in the chute (9), measured with a sensor installed in it, reaches a preset level, the drive electric motor of the pressure screw (11), which rotates the cutting unit knives (18) - (22), is automatically enabled. Later on, the meat pressure in the head (17) is maintained at a preset level by a system, which includes the meat pressure sensor installed in the chute (9). The said system correspondingly changes the rotation frequency of the feeding screw (4). Meat pieces are transferred from the chute (9) to the barrel (15) with the blade catching part of the rotated pressure screw (11). At that, with the blade of the curved knife (16), interacting with the two-thread blade of the catching part of the pressure screw (11), those parts are cut off from meat pieces, which protrude beyond the inlet of the barrel (15). With the pressure screw (11), interacting with the barrel (15), enclosing it, meat is forced into the cavity of the mincer cutting unit head (17). Meat, moved in the cavity of the head (17), is delivered to each of the plates (25) - (27) from the direct-flow chambers (28) - (30), within which it is not rotated. On the receiving plate (25) and the intermediate plate (26) meat, as well as accompanying bones, cartilages and tendons, is cut into parts in four stages. For this purpose there are used the orifice edge front parts (41) of the said plates, interacting with the blade cutting edges (46) of the unilateral receiving knives (18), (19) and the intermediate knives (20), (21). The direct-flow chamber (30) is filled with produced meat pieces, some of which are meat on bones, cartilages and tendons. From the direct-flow chamber (30) meat pieces are reciprocally delivered to the cutting-separating plate (27). On the cutting-separating plate (27) meat is minced in cycles. Each cycle begins with that meat pieces are pressed to the cutting-separating plate (27) with pressure, developed by the pair of the pressure screw (11) and the barrel (15). Meat pressure level in the head (17), chosen by the operator, depending on the type of minced meat, is determined by the hydrodynamic resistance of the cutting-separating plate (27) and the hardness ratio of muscular and "friable" connective tissues. That is why only those muscle and adipose tissues can be pressed into the orifices of the cutting-separating plate (27), which belong to meat pieces, pressed to the plate, and all kinds of connective tissues and the hard admixture tissues of these pieces stay on its surface. Meat pieces, caught on the cutting-separating plate (27) with muscle and adipose tissues, are held by the plate up to the arrival of the blades of the separating knife (22). When the knife blades pass the cutting-separating plate (27), tissues, placed in its orifices, are cut off from pieces, pressed to the plate. At that, meat is cut with miniature cutting pairs, each of which is composed of the edge front part (41) of a corresponding orifice of the cutting-separating plate (27) and a knife blade cutting edge (46) of the separating knife (22). As the tissues, placed in the orifices of the cutting-separating plate (27), are cut off, meat pieces, freed from them, slide on the front blade parts of the separating plate (22), which return them into the direct-flow chamber (30). After the passing of the knife blades, these meat pieces are again supplied to the cutting-separating plate (27). They are again pressed to its surface, thus starting new cycles of meat mincing. For meat pieces, bone pieces, as well as scraps of cartilages and tendons such cycles are repeated till completing mincing their muscle and adipose tissues. In the process of their reciprocal movement meat pieces are intensely massaged, which improves the quality of foodstuffs.

The process of mincing meat on the cutting-separating plate (27) is combined with the first stage of its mechanical removal from bones, cartilages and tendons, with its degassing and selecting "friable" connective tissue from it.

At the first stage of mechanically removing meat from pieces of bones, cartilages and tendons, only muscle tissues are cut off with the cutting elements of the cutting-separating pair. Connective tissues and, especially, hard tissues of the said inclusions are not minced: they cannot be pressed into the orifices of the cutting-separating plate (27) as there is not enough pressure developed by the pair of the pressure screw (11) and the barrel (15). Rolling over the blades of the separating knife (22), pieces of bones, cartilages and tendons, selected with this plate and carrying connective tissues and scraps of muscle tissue, move in the meat stream in peripheral direction, when pushed by the curved blades. Scraping off the tissues from the surface of the hard inclusions with the edge front parts (41) of orifices to pass meat, made in the cutting-separating plate (27), has a limited character. This is achieved by means of reducing the diameter of those orifices of the said plate, which are in its periphery. Hard inclusions, selected from meat, are delivered to the pit (54), where they go through the ports (24) of the rim (24) of the separating knife (22).

Degassing minced meat is performed in the following way. A stream of meat pieces, directed at the cutting-separating plate (27), in which the right-hand separating knife (22) rotates, can be considered thick liquid. The consequence of resulting hydrodynamic resistance to knife blade movement from the stream of meat pieces, flowing through it, is that before each of them a zone of higher pressure moves and behind it a zone of lower pressure moves. Rolling over the blades of the right-hand separating knife (22), each minced meat piece goes from a zone of higher pressure to a zone of lower pressure. Spasmodic pressure decrease leads to the boiling up of gases, dissolved in the intercellular and intracellular liquids, as well as in meat tissues. Surface meat layers, experiencing shock degassing, are immediately cut off by the cutting-separating pair. At following forcemeat processing, evolving gas bubbles escape into the atmosphere. The result of the layer-by-layer shock degassing of minced meat is the abrupt improvement of foodstuffs organoleptic characteristics.

Fragments of large vessels, films and structures, combining muscle cells in bundles, are selected from minced meat in the following processes. Zones of lower pressure, moved in circle behind the blades of the separating knife (22), carry away meat pieces, rolling over them. In the same direction they are pushed by the stream of meat pieces, which are again supplied to the cutting-separating plate (27) after knife blade passing. Meat pieces, touching this plate with muscular or adipose tissue, cannot move in circle after the blades of the separating knife (22): they cling to the plate with their tissues, pressed into its orifices. Fragments of "friable" connective tissue behave differently: the resilient properties of connective tissue do not let them cling to the edges of plate orifices, that is why they slide on the plate surface, moving after the blades of the separating knife (22). The stream of meat, supplied to the cutting-separating plate (27), pushes them into the rotated discharge channels (52), along which they move in peripheral directions. Scraps of "friable" connective tissue, being within the discharge channels (52), are practically not minced with the front parts (41) of the orifice edges of the cutting-separating plate (27). This is explained by that the pressure, pressing them to the cutting-separating plate (27), is comparatively low, because each discharge channel (52) is communicated with a zone of underpressure, moving after a blade of the separating knife (22). Fragments of "friable" connective tissue are delivered to the pit (54), into which they are pushed through ports (24), made in the rim (23) of the separating knife (22). Here they are mixed with pieces of bones, cartilages and tendons, selected from meat. A shield (55), installed before the pit (54), blocks those meat pieces, which move from the direct-flow chamber (30) to the cutting-separating plate (27). From the mincer cutting unit primary products of meat separation are periodically discharged through the radial discharge branch (53).

Primary separation products are accumulated, and then they are additionally minced with the cutting unit of the same mincer. At that, the same minced meat separator is used. At that, however, its operation mode changes in such a way, that the cutting-separating pair minces not only muscle and adipose tissues, but also "friable" connective tissues. This is achieved due to that the meat pressure in the cavity of the head (17) decreases by 30 - 70 %. Such an operation mode of the minced meat separator provides both for mechanically removing scraps of muscle and "friable" connective tissues from pieces of bones, cartilages and tendons and mincing all kinds of "friable" connective tissue through cutting. The same measure allows minimizing the content of periosteum and cartilage slices in produced forcemeat. Produced forcemeat consists of particles of "friable" connective tissue with admixtures of muscle and adipose tissues. Secondary separation products are represented by pieces of bones, cartilages and tendons. Loss of muscle and connective tissues with secondary separation products is practically impossible.

The minced meat separator of the special mincer cutting unit traps all kinds of bones, other kinds of hard inclusions, having the form of cartilage and tendon scraps, as well as practically all kinds of "friable" connective tissue. Calcium content in minced meat in the form of bone, cartilage and tendon tissues, as well as any kinds of connective tissue is minimized. This is explained by the limited contact time of moving calcium-containing inclusions with the front edge parts (41) of the orifices of the cutting-separating plate (27). Such a contact is possible only in the first moments of the initial stages of their return movement into the direct-flow chamber (30) and in the first moments after their repeated touching the surface of the plate (27). Some kinds of connective tissues, namely, those having very friable structure, can also get into forcemeat.

At meat mincing, out of the orifices of the cutting-separating plate (27) there are go particles of muscle and adipose tissues in the form of miniature tablets, as a rule, with parallel-sided bases, the said particles being produced only by cutting. These particles have equal diameters but different lengths. At mincing hard meat tissues, they are shorter than at grinding soft tissues. The cutting unit of the suggested mincer gets automatically adjusted to meat hardness: the harder minced meat tissues are, the more shallowly they are pressed into the orifices of the cutting-separating plate (27), i.e., the finer forcemeat is produced.

The particle thickness of "friable" connective tissues in forcemeat, produced at additionally mincing primary separation products, is not stable. It is also determined by the hardness of these tissues. The effect of automatically adjusting the cutting unit to the hardness of minced raw materials allows greatly reducing electric power consumption at subsequently chopping this forcemeat.

The suggested mincer cutting unit, equipped with a new minced meat separator, allows processing fresh-killed or chilled untrimmed meat on bones. The quality of produced forcemeat is greater than the quality of forcemeat of manually trimmed meat.

With the cutting unit of the suggested mincer it is possible to mince deep-freeze meat, previously passed through a block-cutter. In this case the minced meat separator will select bone pieces.

There is possible a special modification of the suggested mincer cutting unit, which is meant for producing forcemeat by means of mechanically boning chilled poultry or fish carcasses. The operation of such a cutting unit is similar to the operation of the cutting unit, used at processing meat. However, in this case a modified cutting-separating pair is used. The diameter of orifices to pass meat, made in the cutting-separating plate (27) of such a modified cutting unit, should not be greater than 1.2 - 1.7 mm. By one of the design variants of such a cutting-separating plate its orifices to pass meat are arranged in the form of two-, three- or four-way spirals. At that, the axes of the said orifices are tilted to the plate surface in the rotation direction of the separating knife (22) at an angle of 72.5 - 75.0°.

The automation system disables the mincer each time the meat pressure in the chute (9) reaches a preset minimal level.

## Industrial applicability

The present invention can be best used in food industry at processing meat, poultry and fish. Produced forcemeat is meant for making sausage, ravioli, semi-finished products, canned goods and other foodstuffs. Besides, the invention can be used in machine-building at manufacturing new-generation mincers and cutting tools, meant for equipping various domestic and industrial mincers.

## Claims

1. A meat processing method, consisting in cutting carcasses of large animals or carcasses of large fish or, if necessary, carcasses of small animals, or carcasses of birds and fish, boning meat and mincing it by a specially meant method, consisting in using a mincer, specially meant for its realization, whose feeding unit is equipped with an inlet plate (7) and an inlet knife (6), installed with the formation of a direct-flow chamber (8), as well as with a feeding screw (4) and a pressure screw (12), whose blade catching parts are situated, correspondingly, in the bed (3) of the receiving funnel (2) and in the bed (11) of the chute (9), communicating the receiving funnel (2) with the cavity of the barrel (15) of the pressure screw (12), the said barrel being equipped with a curved knife (16) and, in its turn, communicated with the cavity of a cutting unit head (17), where with the formation of direct-flow chambers (28), (29), and (30) there are installed two unilateral receiving knives (18), (19), two unilateral intermediate knives (20), (21) and a unilateral separating knife (22) which, like the inlet knife (6), are made with figured projections (44) on their blades, as well as a receiving plate (25), an intermediate plate (26) and a cutting-separating plate (27), having ring projections (39), enclosing the area of orifices to pass meat, which, like the ring projection (39) of the inlet plate (7), interact with adjoining blade figured projections (44) of the knives (18) - (22) and (6), forming cutting pairs, the peculiarity of each of which is that the ratio of the length of any arc, belonging to the sole (45) of a knife blade figured projection (44), to the length of a circle of the same radius, continuous or interrupted by orifices to pass meat and belonging to the working surface (40) of a plate ring projection (39), is proportionate to the product of function numerical values, each of which is calculated for considered location of the said arc and circle, and whose totality allows correcting the shape of the sole (45) in order to ensure its even wear, consisting also in using a minced meat separator, built into the cutting unit head (17) of the special mincer, incorporating the cutting-separating plate (27) and the unilateral separating knife (22), installed at the end of the direct-flow chamber (30), the longitudinal recesses (52) of the blades of the separating knife (22), interacting with the working surface (40) of the ring projection (39) of the cutting-separating plate (27) and forming rotated discharge channels (53), communicating zones of the direct-flow chamber (30), situated behind them, with the inlet of an axial discharge branch (57) or, by another variant, periodically communicating the said zones of the direct-flow chamber (30) with the inlet of a radial discharge branch (55), at that, at mincing meat by the special method, with a blade of the curved knife (16), periodically interacting with the blade catching part of the pressure screw (12), from meat pieces, entering the barrel (15), those parts are cut off, which protrude beyond its inlet, and then with cutting pairs, formed by the ring projections (39) of the receiving plate (25) and the intermediate plate (26) and the blade figured projections (44) of the unilateral receiving knives (18), (19) and the intermediate knives (20), (21), meat, moved in the cavity of the cutting unit head (17), is hashed into parts in four stages, the said parts being reciprocally delivered from the direct-flow chamber (30) to the cutting-separating plate (27), where with cutting element pairs, represented by the edge front parts (41) of its orifices, meant for passing meat, and the cutting edges (46) of the soles (45) of the blade figured projections (44) of the unilateral separating knife (22), muscle and adipose tissues, periodically pressed into these orifices, are cut off, and pieces of bones, cartilages, tendons, scraps of large vessels, films and structures, combining muscle cells in bundles, selected by the cutting-separating plate (27), are discharged from the cutting unit head (17) through the axial discharge branch (57) or, by another variant, through the radial discharge branch (55) in the form of primary separation products, which are accumulated and then additionally minced with the cutting unit of the same mincer, hard inclusions being removed from them with the same minced meat separator, with the production of forcemeat, consisting of connective tissue particles with admixture of muscle and adipose tissues, which is used in foodstuffs production, the said method differing in that carcasses of large animals or carcasses of large fish or, if necessary, carcasses of small animals, fish or poultry carcasses are cut into fragments, whose size is limited by the volume of spaces between the coils of the blade catching part of the feeding screw (4) of the used special mincer, then, in case of processing pork or meat of other large animals, meat is manually removed from large bones, and produced flesh together with the rest of carcass fragments in the form of either meat on bones, fragments or whole carcasses of small animals or fragments or whole carcasses of birds, or fragments of carcasses or carcasses of fish are loaded into the receiving funnel (2) of the used special mincer, by means of which in the process of mincing and separating meat its mechanical boning is performed, wherefore first with cutting pairs, formed by the ring projection (39) of the inlet plate (7) and the blade figured projections (44) of the unilateral inlet knife (6) bones, cartilages and tendons, together with meat, are cut into parts, whose size allows placing them in spaces between the coils of the blade catching part of the pressure screw (12), and then with the blade of the curved knife (16), periodically interacting with the blade catching part of this screw, and cutting pairs, formed by the ring projections (39) of the receiving plate (25) and the intermediate plate (26), as well as by the blade figured projections (44) of the unilateral receiving knives (18), (19) and intermediate knives (20), (21), they are cut into parts in five stages, and then with cutting element pairs, belonging to the cutting-separating plate (27) and the unilateral separating knife (22), there is performed the mechanical removal of meat from pieces of bones, cartilages and tendons, combined with its mincing, due to that not less than 90% of muscle tissues are cut off from them, and the rest of which, as well as connective tissues, covering pieces of the said hard admixtures, are cut off with the same cutting element pairs at the final stage of additionally mincing primary separation products, at whose realization in the cutting unit head (17) meat pressure is reduced by 30 - 70 %.

2.  Meat processing method by point 1, differing in that in case of removing meat from the largest bones of pig carcasses simplified meat trimming is performed, consisting in dividing selected pieces into three grades, at whose mincing lean, semi-fat and fatty forcemeat with low calcium content is produced.

3.  Meat processing method by point 1, differing in that in case of removing meat from the largest bones of large animal carcasses simplified meat trimming is performed, consisting in dividing selected pieces into three grades, at whose mincing higher-, first- or second-grade forcemeat with low calcium content is produced.

4.  A meat processing method by point 3, differing in that primary separation products, selected in the process of mincing higher- or first-grade meat pieces, are additionally minced in mixture with, correspondingly, first- or second-grade meat pieces.

5.  Meat processing method by point 1, differing in that from forcemeat, produced at additionally mincing primary separation products, emulsion is made, which is used at producing foodstuffs as a natural protein additive instead of meat.

6.  A meat processing method by point 5, differing in that produced emulsion is treated with acetic, lactic, amber or racemic acid.

7.  A meat mincing method, specially meant for realizing the meat processing method by point 1, consisting in using a mincer, specially meant for its realization, whose feeding unit is equipped with an inlet plate (7) and an inlet knife (6), installed with the formation of a direct-flow chamber (8), as well as with a feeding screw (4) and a pressure screw (12), whose blade catching parts are installed, correspondingly, in the bed (3) of the receiving funnel (2) and the bed (11) of the chute (9), communicating the receiving funnel (2) with the cavity of the barrel (15) of the pressure screw (12), the said barrel being equipped with a curved knife (16) and, in its turn, communicated with the cavity of the cutting unit head (17), where with formation of direct-flow chambers (28), (29) and (30) there are installed two unilateral receiving knives (18), (19), two unilateral intermediate knives (20), (21), and a unilateral separating knife (22), which, like the inlet knife (6), are made with figured projections (44) on their blades, and a receiving plate (25), an intermediate plate (26) and a cutting-separating plate (27), having ring projections (39), enclosing the area of orifices to pass meat, which, like the ring projection (39) of the inlet plate (7), at mincer operation interact with the adjoining blade figured projections (44) of the knives (18) - (22) and (6), forming cutting pairs, whose peculiarity is that the ratio of the length of any arc, belonging to the sole (45) of a knife blade figured projection (44), to the length of a circle of the same radius, continuous or interrupted by orifices to pass meat and belonging to the working surface (40) of a plate ring projection (39), is proportionate to the product of function numerical values, each of which is calculated for the considered location of the said arc and circle, and whose totality allows correcting the shape of the sole (45) in order to ensure its even wear, also consisting in using a minced meat separator, built into the special mincer cutting unit head (17), incorporating the cutting-separating plate (27) and the unilateral separating knife (22), installed at the end of the direct-flow chamber (30), the blade longitudinal recesses (52) of the said knife interacting with the working surface (40) of the ring projection (39) of the cutting-separating plate (27) and forming rotated discharge channels (53), communicating zones of the direct-flow chamber (30), situated behind them, with the inlet of the axial discharge branch (57) or, by another variant, periodically communicating the said zones of the direct-flow chamber (30) with the inlet of the radial discharge branch (55), at that, at mincing meat by the special method, with the blade of the curved knife (16), periodically interacting with the blade catching part of the pressure screw (12), from meat pieces, coming into the barrel (15), those parts are cut off, which protrude beyond its inlet, and then with cutting pairs, formed by the ring projections (39) of the receiving plate (25) and the intermediate plate (26), as well as by the knife blade figured projections (44) of the unilateral receiving knives (18), (19) and the intermediate knives (20), (21) meat, moved in the cavity of the cutting unit head (17), is hashed into parts in four stages, the said parts being reciprocally delivered from the direct-flow chamber (30) to the cutting-separating plate (27), where with cutting element pairs, represented by the front parts (41) of its orifices, meant for passing meat, and the cutting edges (46) of the soles (45) of the blade figured projections (44) of the unilateral separating knife (22), muscle and adipose tissues, periodically pressed into these orifices, are cut off, and pieces of bones, cartilages, tendons, scraps of large vessels, films and structures, combining muscle cells in bundles, selected with the cutting-separating plate (27), are discharged from the cutting unit head (17) through the axial discharge branch (57) or, by another variant, through the radial discharge branch (55) in the form of primary separation products, which are accumulated and then additionally minced with the cutting unit of the same mincer, hard inclusions being removed from them with the same minced meat separator, with the production of forcemeat, consisting of connective tissue particles with admixture of muscle and adipose tissues, which is used in foodstuffs production, the said method differing in that either meat pieces or fragments of large animal carcasses, being meat on bones, or fragments or whole carcasses of small animals, or fragments or whole carcasses of birds, or carcass fragments or whole carcasses of fish, going from the receiving funnel (2) of the used special mincer, with cutting pairs, formed by the ring projection (39) of the inlet plate (7), as well as by the blade figured projections (44) of the unilateral inlet knife (6), are hashed into pieces together with bones, cartilages and tendons, the size of the pieces allowing placing them in spaces between the blade catching part coils of the pressure screw (12), and then with the blade of the curved knife (16), periodically interacting with the catching part blade of this screw, and cutting pairs, formed by the ring projections (39) of the receiving plate (25) and the intermediate plate (26), as well as by the blade figured projections (44) of the unilateral receiving knives (18), (19) and the unilateral intermediate knives (20), (21), they are hashed into parts in five stages, and then with cutting element pairs, belonging to the cutting-separating plate (27) and the unilateral separating knife (22), not less than 90 % of muscle tissues are cut off from pieces of bones, cartilages and tendons, and the rest of muscle tissues, together with connective tissues, covering pieces of bones, cartilages and tendons, are cut off with the same cutting element pairs at the final stage of additionally grinding primary separation products.

8. A meat mincing method by point 7, differing in that parts of meat pieces and bones, cartilages and tendons, contained in them, protruding beyond the inlet of the barrel (15) of the pressure screw (12), are cut off in the course of their moving on the blade of the curved knife (16).

9. A meat mincing method by point 7, differing in that, at least, some bones, cartilages and tendons, entering the orifices of the inlet plate (7), the receiving plate (24) and the intermediate plate (26) together with meat, are hashed into parts in the course of their movement on the edge front parts (41) of the said orifices.

10. A mincer, specially meant for realizing the meat mincing method by point 7, incorporating a housing (1), a receiving funnel (2), a cutting unit and a feeding unit with a pressure screw (12), having an individual drive, the said screw being made with a catching part and a forcing part of the blade, a portion of the former being enclosed by a curvilinear knife (16) and the latter being situated in a barrel (15), communicated with the cavity of a cutting unit head (17), where with formation of three direct-flow chambers (28), (29) and (30) there are installed two unilateral receiving knives (18), (19), two unilateral intermediate knives (20), (21) and a unilateral separating knife (22), the blades of each of which have figured projections (44), as well as a receiving plate (25), an intermediate plate (26) and a cutting-separating plate (27), made with ring projections (39), enclosing the area of orifices to pass meat, the said ring projections interacting with the adjoining blade figured projections (44) of the knives (18) - (22) and forming cutting pairs, the peculiarity of each of which being that the ratio of the length of any arc, belonging to the sole (45) of a knife blade figured projection (44), to the length of a circle of the same radius, continuous or interrupted by orifices to pass meat and belonging to the working surface (40) of a plate ring projection (39), is proportionate to the product of function numerical values, each of which is calculated for the considered location of the said arc and circle, and whose totality allows correcting the shape of the sole (45) in order to ensure its even wear, also including a minced meat separator, built into its cutting unit, whose main parts are the cutting-separating plate (27) and the unilateral separating knife (22), installed at the end of the direct-flow chamber (30), the longitudinal recesses (52) of the blades of the knife interacting with the working surface (40) of the ring projection (39) of the cutting-separating plate (27) and forming rotated discharge channels (53), communicating zones of the direct-flow chamber (30), situated behind the channels, with the inlet of an axial discharge branch (57) or, by another variant, periodically communicating the said zones of the direct-flow chamber (30) with the inlet of a radial discharge branch (55), differing in that the curvilinear knife (16) is made in the form of a cylindrical pipe piece with a longitudinal slit, and the feeding unit is supplemented with a feeding screw (4), equipped with an individual drive (5), and a chute (9), which communicates the receiving funnel (2) with the cavity of the barrel (15), at that, the blade catching parts of the feeding screw (4) and the pressure screw (12) are installed, correspondingly, in the bed (3) of the receiving funnel (2) and the bed (11) of the chute (9), and at the entrance of the chute (9) there are installed an inlet knife (6), whose blades are made with figured projections (44), and an inlet plate (7), whose ring projection (39), enclosing the area of orifices to pass meat, made in it, forms cutting pairs while interacting with the adjoining blade figured projections (44) of the inlet knife (6).

11. A mincer by point 10, differing in that the axes of the feeding screw (4) and the pressure screw (12) are installed in the same vertical plane or in a plane, tilted to the horizon at an angle greater than the angle of the natural slope of minced meat pieces.

12. A mincer by point 10, differing in that its feeding screw (4) and pressure screw (12) are situated at an angle to each other.

13. A mincer by point 10, differing in that, at least, a portion of the catching part blade of the pressure screw (12) is made two-thread.

14. A mincer by point 10, differing in that the inlet plate (7) and the inlet knife (6) are installed with the formation of a direct-flow chamber (8).

15. A mincer by point 10, differing in that the blades of the unilateral inlet knife (6) are curved or tilted in the direction of its rotation, and the convexities of the edge front parts (41) of orifices to pass meat, made in the inlet plate (7), are displaced to the centre of the cutting pair.

16. A mincer by point 10, differing in that the blade of the curved knife (16) is made with inclination in the direction of meat movement.

17. A mincer by point 16, differing in that the curved knife (16) is installed with the possibility of turning in relation to the axis of the barrel (15).

18. A mincer by point 10, differing in that the blade of the curved knife (16) is V-shaped.

19. A mincer by point 10, differing in that in the cavity of the chute (9) a pressure sensor is installed, the said sensor being included in the system of automatically controlling the operation of the drive (5) of the feeding screw (4).

20. A mincer by point 10, differing in that the individual drive of the pressure screw (12) is made two- or three-speed.

**21.** A mincer by point 10, differing in that the blade figured projections (44) of the knives (6), (18) - (22) are alternately displaced in relation to each other in axial and peripheral direction at distances, corresponding, at least, to half the oscillation amplitude of the rotation axis of a corresponding knife, whose value is determined by the maximum angle of its nutation.

**22.** A mincer cutting unit made by point 10, in the cavity of whose head (17) with the formation of three direct-flow chambers (28) - (30) there are installed two unilateral receiving knives (18), (19), two unilateral intermediate knives (20), (21) and a unilateral separating knife (22), having figured projections (44) on their blades, as well as a receiving plate (25), an intermediate plate (26) and a cutting-separating plate (27), adjoining the arms of a clamping spider (38), the said plates being made with ring projections (39), enclosing the area of orifices to pass meat, at meat operation the said ring projections interacting with the adjoining blade figured projections (44) of the knives (18) - (22) and forming cutting pairs, the peculiarity of each of which being that the ratio of the length of any arc, belonging to the sole (45) of a knife blade figured projection (44), to the length of a circle of the same radius, continuous or interrupted by holes to pass meat and belonging to the working surface (40) of a plate figured projection (39), is proportionate to the product of function numerical values, each of which is calculated for the considered location of the said arc and circle, and whose totality allows correcting the shape of the sole (45) in order to ensure its even wear, including an in-built minced meat separator, whose main parts are the cutting-separating plate (27) and the unilateral separating knife (22), installed at the end of the direct-flow chamber (30), the longitudinal recesses (52) of the blades of the knife interacting with the working surface (40) of the ring projection (39) of the cutting-separating plate (27) and forming rotated discharge channels (53), communicating zones of the direct-flow chamber (30), situated behind the channels, with the inlet of an axial discharge branch (57) or, by another variant, periodically communicating the said zones of the direct-flow chamber (30) with the inlet of a radial discharge branch (55), also including spreading sleeves (31) - (33), installed between the hubs of the knives (18) - (22), and, at least, one compressed resilient element (35), differing in that the resilient element (35) is made, at least, two-stage, and the receiving plate (25) and the intermediate plate (26) are installed with the possibility of joint movement in axial direction together with the adjoining knives (18) - (21), at that, a removable support sleeve (51) is inserted in the central orifice of, at least, one of the plates.

**23.** A cutting unit by point 22, differing in that the blades of its unilateral receiving knives (18), (19) and unilateral intermediate knives (20), (21) are curved or tilted in the direction of their circular movement, and the convexities of the edge front parts (41) of orifices to pass meat, made in the receiving plate (25) and the intermediate plate (26), are displaced to their centers.

**24.** A mincer cutting unit by point 22, differing in that the cutting-separating plate (27) has no orifices to pass meat in the places of its adjoining the arms of the clamping spider (38).

**25.** A cutting unit by point 22, differing in that in its head (17) an additional clamping spider (37) is fixed, the said spider being supplied with a forcing screw (36), resting against the clamping spider (38), adjoining the cutting-separating (27).

**26.** A mincer cutting unit by point 22, differing in that the area of, at least, one orifice to pass meat, made in the intermediate plate (26), is 1.5 - 3 times as great as the area of its other orifices of the same purpose.

**27.** A minced meat separator, built into the head (17) of the cutting unit, made by point 22, incorporating working organs, situated at the end of its direct-flow chamber (30), being last in the course of meat movement, the said working organs being represented by a cutting-separating plate (27) with a ring projection (39), enclosing the area of orifices to pass meat, made in it, and a unilateral separating knife (22) with figured projections (44) on its blades, each of which, interacting with the ring projection (39) of the cutting-separating plate (27) at mincer operation, forms a cutting pair, whose peculiarity is that the ratio of the length of any arc, belonging to the sole (45) of a knife blade figured projection (44), to the length of a circle of the same radius, continuous or interrupted by orifices to pass meat and belonging to the working surface (40) of the plate ring projection (39), is proportionate to the product of function numerical values, each of which is calculated for the considered location of the said arc and circle, and whose totality allows correcting the shape of the sole (45) in order to ensure its even wear, also including rotated discharge channels (53), formed by the blade longitudinal recesses (52) of the unilateral separating knife (22) and the working surface (40) of the ring projection (39) of the cutting-separating plate (27), each of the channels communicating a zone of the direct-flow chamber (30), situated behind it, with the inlet of an axial discharge branch (57), differing in that the blades of the unilateral separating knife (22) are curved or tilted in the direction of their circular movement, and their longitudinal recesses (52) are made widening in opposite direction.

**28.** A minced meat separator by point 27, differing in that the diameter of, at least, a fourth of orifices to pass meat, made in the cutting-separating plate (27), namely, of those situated in its central part, is 70 - 90 % of the diameter of the other orifices.

**29.** A minced meat separator, made by another variant, also built into the head (17) of the cutting unit, made by point 22, including cutting organs, installed at the end of its direct-flow chamber (30), situated last in the course of meat movement, the said cutting organs being represented by a cutting-separating plate (27) with a ring projection (39), enclosing the area of orifices to pass meat, made in it, and a unilateral separating knife (22) with figured projections (44) on its blades, each of which forms a cutting pair while interacting with the ring projection (39) of the cutting-separating plate (27) at mincer operation, the peculiarity of the cutting pair being that the ratio of the length of any arc, belonging to the sole (45) of a knife blade figured projection (44), to the length of a circle of the same radius, continuous or interrupted by orifices to pass meat and belonging to the working surface (40) of the plate ring projection (39), is proportionate to the product of function numerical values, each of which is calculated for the considered location of the said arc and circle, and whose totality allows correcting the shape of the sole (45) in order to ensure its even wear, also including rotated discharge channels (53), formed by the blade longitudinal recesses (52) of the unilateral separating knife (22) and the working surface (40) of the ring projection (39) of the cutting-separating plate (27), each of the channels communicating a zone of the direct-flow chamber (30), situated behind it, with the inlet of the axial discharge branch (57), differing in that the blades of the unilateral separating knife (22) are curved or tilted in direction opposite to that of their circular movement, and their longitudinal recesses (52) are made widening in the same direction.

**30.** A minced meat separator by point 29, differing in that the inlet of the radial discharge branch (55) is situated in the housing pit (54) of the cutting unit head (17).

**31.** A minced meat separator by point 30, differing in that in front of the pit (54) of the radial discharge branch (54) a shield (56) is installed.

**32.** A minced meat separator by point 29, differing in that the unilateral separating knife (22) is supplemented with a ring (23) with ports (24).

**33.** A minced meat separator by point 29, differing in that the diameter of, at least, a fifth of orifices to pass meat, made in the cutting-separating plate (27), namely, of those situated in its peripheral area, is 70 - 90% of the diameter of the other orifices.

**34.** A minced meat separator by point 29, differing in that the orifices to pass meat, made in the cutting-separating plate (27), are arranged in the form of a monofilar helix or multifilar helixes, and their axes are tilted in the rotation direction of the separating knife (22).

**35.** A mincer cutting pair, composed of the ring projection (39) of a plate (7), (25), (26) or (27), enclosing the area of orifices to pass meat, and a blade figured projection (44) of a knife (6), (18), (19), (20), (21) or (22), made widening in peripheral direction with, at least, one part, narrowing in the same direction, the interacting surfaces of the cutting pair being functionally related in such a way, that in any point of their contact the length of an arc, belonging to a knife blade sole (45), is proportionate to the length of a circle of the same radius, continuous or interrupted by orifices to pass meat and belonging to a plate working surface (40), differing in that the height of the plate ring projection (39) is proportionate to the height of the knife blade figured projection (44), at that, the constant of proportionality, relating these heights, as well as the constant of proportionality, relating the said parameters of the interacting surfaces, are correlated as the volumes of the pair wearing parts.

**36.** A mincer cutting pair by point 35, differing in that the ratio of the height of the plate ring projection (39) to the height of the knife blade figured projection (44) is determined by the expression

$$\frac{\delta_2}{\delta_1} = \frac{V_2}{V_1} \frac{l}{2\pi\rho},$$

where $V_2$ and $V_1$ are the volumes of the plate ring projection (39) and the knife blade figured projection (44);
$l$ is the length of the arched base of the sole (45), having radius $\rho$,
at that, the shape of the knife blade sole (45) and the configuration of the plate working surface (40) are related by the equation

$$l_i / \sum_{j=1}^{\tau} l_{j,i} = \frac{l}{2\pi\rho},$$

where $l_i$ is the length an arc, having radius $\rho_i$ and belonging to the sole (45);

$\sum_{j=1}^{\tau} l_{j,i}$ is the length of a circle, continuous or interrupted by orifices to pass meat and belonging to the working surface (40) of the plate ring projection (39), expressed in the form of a sum of the lengths of $\tau$ $l_j$-arcs, having radius $\rho_i$, the ends of each of which are on the edges of orifices to pass meat.

37. A mincer cutting pair, made by another variant, composed of the ring projection (39) of a plate (7), (25), (26) or (27), enclosing the area of orifices to pass meat, and a blade figured projection (44) of a knife (6), (18), (19), (20), (21) or (22), made widening in peripheral direction with, at least, one part, narrowing in the same direction, the interacting surfaces of the said pair being correlated in such a way, that in any point of their contact the length of an arc, belonging to a knife blade sole (45), is proportionate to the length of a circle of the same radius, continuous or interrupted by orifices to pass meat and belonging to a plate working surface (40), differing in that the functional dependence, relating the pair interacting surfaces, is supplemented with a correcting function, considering the wear intensity of the pair parts in peripheral direction, at that, the ratio of the height of the plate ring projection (39) to the height of the knife blade figured projection (44) is proportionate to the ratio of the volumes of these projections, multiplied by the arithmetic mean value of the total of the used correcting function values, calculated for the considered contact points, at that, the constants of proportionality, relating the said parameters of the pair interacting surfaces and the heights of their wearing parts, are correlated as their volumes.

38. A mincer cutting pair by point 37, differing in that the ratio of the height of the plate ring projection (39) to the height of the knife blade figured projection (44) is determined by the expression

$$\delta_2 / \delta_1 = \frac{V_2}{V_1} \frac{l}{2\pi\rho} (1 + \xi \frac{\rho_i}{\rho}),$$

where $1 + \xi \frac{\rho_i}{\rho}$ is a correcting function, considering the increase of pair parts wear intensity in peripheral direction;

$\xi$ is an empirical coefficient,
at that, the shape of the knife blade sole (45) and the configuration of the plate working surface (40) are related by the equation

$$l_i / \sum_{j=1}^{n} l_{j,i} = \frac{l}{2\pi\rho} (1 + \xi \frac{\rho_i}{\rho}).$$

39. A mincer cutting pair, made by a third variant, composed of the ring projection (39) of a plate (7), (25), (26) or (27), enclosing the area of orifices to pass meat, and a blade figured projection (44) of a knife (6), (18), (19), (20), (21) or (22), made widening in peripheral direction with, at least, one part, narrowing in the same direction, the interacting surfaces of the said pair being correlated in such a way, that in any point of their contact the length of an arc, belonging to a knife blade sole (45), is proportionate to the length of a circle of the same radius, continuous or interrupted by orifices to pass meat and belonging to a plate working surface (40), differing in that the functional dependence, relating the pair interacting surfaces, is supplemented with a correcting function, considering the wear intensity of the pair parts in peripheral direction, as well as with a product of functions, considering the influence of the cutting elements of the pair on its wearing parts, at that, the ratio of the height of the plate ring projection (39) to the height of the knife blade figured projection (44) is proportionate to the ratio of the volumes of these projections, multiplied by the arithmetic mean value of the total of the used correcting function values, calculated for the considered contact points, and the constant of proportionality, relating the said parameters of the pair interacting surfaces, and the constant of proportionality, relating the heights of the pair wearing parts, are correlated as the volumes of these parts.

**40.** A mincer cutting pair by point 39, differing in that the ratio of the height of the plate ring projection (39) to the height of the knife blade figured projection (44) is determined by the expression

$$\delta_2 / \delta_1 = \frac{V_2}{V_1} \frac{l}{2\pi\rho} (1 - \sigma \cos\alpha)[\frac{1}{\tau}\sum_{j=1}^{\tau}(1 + \varepsilon k \cos\beta)](1 + \xi \frac{\rho_i}{\rho}),$$

at that, in the area of orifices to pass meat the shape of the sole (45) of the knife blade figured projection (44) and the configuration of the plate working surface (40) are related by the equation

$$l_i / \sum_{j=1}^{\tau} l_{j,i} = \frac{l}{2\pi\rho} (1 - \sigma \cos\alpha)[\frac{1}{\tau}\sum_{j=1}^{\tau}(1 + \varepsilon k \cos\beta)](1 + \xi \frac{\rho_i}{\rho}),$$

and in the continuous ring zones, bordering this area, the used functional dependence has the form

$$\frac{l_i}{2\pi\rho_i} = \frac{l}{2\pi\rho}(1 - \sigma \cos\alpha)(1 + \xi \frac{\rho_i}{\rho}),$$

where $f_2(x) = 1 - \sigma \cos\alpha$ is a correcting function, considering the wear intensity increase of the face working surface of the plate ring projection (39);
$\sigma$ is an empirical coefficient;
$\alpha$ is the angle between the radius $\rho_i$ and the tangent to the line of the cutting edge (46) of the sole (45) of the knife blade figured projection (44) in an i-point;

$f_3(x) = \frac{1}{\tau}\sum_{j=1}^{\tau}(1 + \varepsilon k \cos\beta)$ is a correcting function, considering the wear of the sole (45) of the knife blade figured projection (44) by the front parts (41) of the plate orifice edges;
s is a coefficient whose value, lying within 1.0 - 1.2, depends on the tilt angle of orifices to pass meat, made in the plate;
$k$ is an empirical coefficient;
$\beta$ is the angle between the radius $\rho_i$ and the tangent to the line of the edge front part (41) of a $j$-plate orifice, meant for passing meat.

**41.** A cutting pair by point 35, differing in that the material of the knife blade figured projection (44) has greater hardness and endurance, than the material of the plate ring projection (39) does.

**42.** A cutting pair by point 35, differing in that the figured projection (44) of the knife blade (22) is made of an extra-hard material.

**43.** A cutting pair by point 35, differing in that the front part surface layer of the knife blade figured projection (45) has glassy structure.

Fig. 1

Fig. 2

Fig. 3

Fig. 4

A

Fig. 5

B - B

Fig. 6

B - B

Fig. 7

C - C

Fig. 8

Fig. 9

Fig. 10

Fig. 11

Fig. 12

Fig. 13

Fig. 14

Fig. 15

Fig. 16

Fig. 17

Fig. 18

Fig. 19

Fig. 20

Fig. 21

Fig. 22

Fig. 23

Fig. 24

Fig. 25

Fig. 26

Fig. 27

E - E

Fig. 28

N - N

Fig. 29

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- RU 0000308 W

- RU 9700379 W

### Non-patent literature cited in the description

- New Meat Processing Technology. *Meat technologies,* 2003, (12), 1-4

- Designing new generation mincers. *Meat industry,* 2003, (12), 23-26